(19) Europäisches Patentamt
European Patent Office
Office européen des brevets

(11) Veröffentlichungsnummer : **0 499 588 A1**

(12) # EUROPÄISCHE PATENTANMELDUNG

(21) Anmeldenummer : **92810087.4**

(22) Anmeldetag : **06.02.92**

(51) Int. Cl.$^5$ : **C09B 62/503,** C09B 62/04, D06P 1/38

(30) Priorität : **15.02.91 CH 469/91**

(43) Veröffentlichungstag der Anmeldung : **19.08.92 Patentblatt 92/34**

(84) Benannte Vertragsstaaten : **BE CH DE ES FR GB IT LI**

(71) Anmelder : **CIBA-GEIGY AG**
**Klybeckstrasse 141**
**CH-4002 Basel (CH)**

(72) Erfinder : **Seiler, Herbert, Dr.**
**Leimgrubenweg 60**
**CH-4125 Riehen (CH)**
Erfinder : **Deitz, Rolf, Dr.**
**Im Heimatland 17**
**CH-4058 Basel (CH)**

(54) **Reaktivefarbstoffe, Verfahren zu deren Herstellung und deren Verwendung.**

(57) Reaktivfarbstoffe der Formel

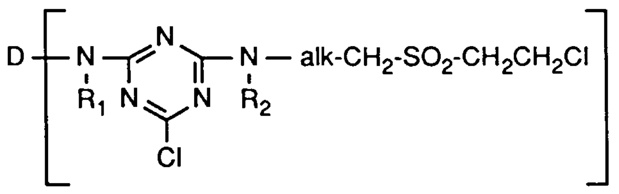

(1),

worin D, $R_1$, $R_2$, alk und n die in Anspruch 1 angegebenen Bedeutungen haben, eignen sich besonders zum Färben oder Bedrucken von cellulosehaltigen Fasermaterialien nach dem Ausziehverfahren oder nach Kontinueverfahren und geben, bei hoher färberischer Ausbeute, Färbungen und Drucke mit guten Echtheitseigenschaften.

EP 0 499 588 A1

Reaktivfarbstoffe werden in grossem Umfange für das Färben und Bedrucken von textilen Fasermaterialien eingesetzt. Obwohl heute eine grosse Anzahl von brauchbaren Reaktivfarbstoffen mit unterschiedlichen Eigenschaften und für verschiedene Anwendungsbereiche zur Verfügung steht, kann der erreichte technische Stand, angesichts der hohen Anforderungen in Bezug auf Eignung für bestimmte Färbeverfahren und Echtheitsniveau der Färbungen, vielfach noch nicht voll befriedigen.

Die Aufgabe der vorliegenden Erfindung ist es, neue Reaktivfarbstoffe zu finden, die für Färbe- und Druckverfahren geeignet sind und die einen hohen Fixiergrad und zugleich eine gute Auswaschbarkeit der nichtfixierten Anteile haben; ferner sollen die Farbstoffe allgemein gute Echtheiten besitzen. Es hat sich gezeigt, dass die weiter unten definierten neuen Farbstoffe die gestellte Aufgabe weitgehend erfüllen.

Gegenstand der Erfindung sind Reaktivfarbstoffe der Formel

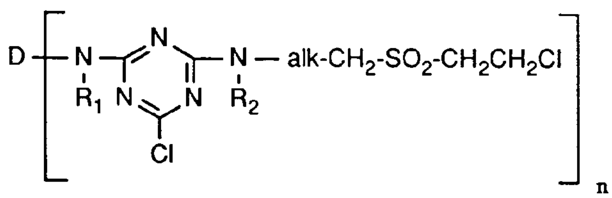

(1),

worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; $R_1$ Wasserstoff oder $C_1$-$C_4$-Alkyl, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann; $R_2$ Wasserstoff oder $C_1$-$C_4$-Alkyl, das durch Halogen, Hydroxy, $C_1$-$C_2$-Alkoxy, Carboxy oder Sulfo substituiert sein kann; alk ein geradkettiger oder verzweigter $C_1$-$C_6$-Alkylenrest; und n die Zahl 1 oder 2 ist; und der Reaktivfarbstoff der Formel (1) mindestens zwei Sulfogruppen enthält; sowie Mischungen der Reaktivfarbstoffe der Formel (1); ausgenommen Monoazo-Farbstoffe der Formel (1), welche als Kupplungskomponente 1-Amino-8-hydroxynaphthalin-3,6-disulfonsäure oder welche als Diazokomponente 2-Naphthylamin- 1,5-disulfonsäure enthalten.

Der Rest D in Formel (1) kann an seinem Grundgerüst die bei organischen Farbstoffen üblichen Substituenten gebunden enthalten.

Als Beispiele für weitere Substituenten im Rest D seien genannt: Alkylgruppen mit 1 bis 4 Kohlenstoffatomen, wie Methyl, Ethyl, Propyl, Isopropyl oder Butyl, Alkoxygruppen mit 1 bis 4 Kohlenstoffatomen, wie Methoxy, Ethoxy, Propoxy, Isopropoxy oder Butoxy, Acylaminogruppen mit 1 bis 8 Kohlenstoffatomen, insbesondere Alkanoylaminogruppen und Alkoxycarbonylaminogruppen, wie Acetylamino, Propionylamino, Methoxycarbonylamino, Ethocycarbonylamino oder Benzoylamino, Phenylamino, N-N-Di-β-hydroxyethylamino, N,N-Di-β-sulfatoethylamino, Sulfobenzylamino, N,N-Disulfobenzylamino, Alkoxycarbonyl mit 1 bis 4 Kohlenstoffatomen im Alkoxyrest, wie Methoxycarbonyl oder Ethoxycarbonyl, Alkylsulfonyl mit 1 bis 4 Kohlenstoffatomen, wie Methylsulfonyl oder Ethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Ethylcarbamoyl, Sulfamoyl, N-Alkylsulfamoyl mit 1 bis 4 Kohlenstoffatomen, wie N-Methylsulfamoyl, N-Ethylsulfamoyl, N-Propylsulfamoyl, N-Isopropylsulfamoyl oder N-Butylsulfamoyl, N-(β-Hydroxyethyl)sulfamoyl, N,N-Di-(β-hydroxyethyl)-sulfamoyl, N-Phenylsulfamoyl, Ureido, Hydroxy, Carboxy, Sulfomethyl oder Sulfo sowie weitere faserreaktive Reste. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Ethyl, Methoxy, Ethoxy, Acetylamino, Benzoylamino, Amino, Chlor, Brom, Ureido, Hydroxy, Carboxy, Sulfomethyl oder Sulfo sowie gegebenenfalls einen weiteren faserreaktiven Rest.

Der Rest $R_1$ ist, falls es sich um einen Alkylrest handelt, geradkettig oder verzweigt; er kann wie angegeben weitersubstituiert sein. Als Beispiele für $R_1$ seien die folgenden Reste genannt: Methyl, Ethyl, Propyl, Isopropyl, Butyl, Isobutyl, sek.-Butyl, tert.-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Chlorethyl, γ-Brompropyl, β-Hydroxy-ethyl oderbutyl, β-Cyanethyl, Sulfomethyl, β-Sulfoethyl, Aminosulfonylmethyl und β-Sulfatoethyl. Vorzugsweise ist $R_1$ Wasserstoff, Methyl oder Ethyl.

Der Rest $R_2$ ist, falls es sich um einen Alkylrest handelt, geradkettig oder verzweigt; er kann wie angegeben weitersubstituiert sein. Als Beispiele für $R_2$ seien die folgenden Reste genannt: Methyl, Ethyl, Propyl, Isopropyl, Butyl, Isobutyl, sek.-Butyl, tert.-Butyl, Carboxymethyl, β-Carboxyethyl, β-Carboxypropyl, β-Methoxyethyl, β-Ethoxyethyl, β-Methoxypropyl, β-Chlorethyl, γ-Brompropyl, β-Hydroxyethyl, β-Hydroxybutyl, Sulfomethyl und β-

Sulfoethyl. Vorzugsweise ist $R_2$ Wasserstoff, Methyl oder Ethyl.

Der Alkylenrest alk ist vorzugsweise Methylen, Ethylen, Methylmethylen, n-Propylen, 2-Methyl-n-propylen, n-Butylen, n-Pentylen.

Bevorzugt sind die Reaktivfarbstoffe der Formel (1), worin

a) $R_1$ Wasserstoff, Methyl oder Ethyl ist; und/oder

b) alk Methylen, Ethylen, n-Propylen, n-Butylen, n-Pentylen oder 2-Methylpropylen ist; und/oder

c) D der Rest eines Monoazofarbstoffes ist; oder

d) D der Rest eines Metallkomplexazo- oder Formazanfarbstoffes ist; oder

e) D der Rest eines Anthrachinonfarbstoffes, Phthalocyaninfarbstoffes oder Dioxazinfarbstoffes ist; oder

f) D der Rest eines 1:1-Kupferkomplexazofarbstoffes der Benzol- oder Naphthalinreihe ist, und das Kupferatom an je eine metallisierbare Gruppe in ortho-Stellung zur Azobrücke gebunden ist; und/oder

g) $R_2$ Wasserstoff ist.

Besonders bevorzugt sind die Reaktivfarbstoffe der Formel

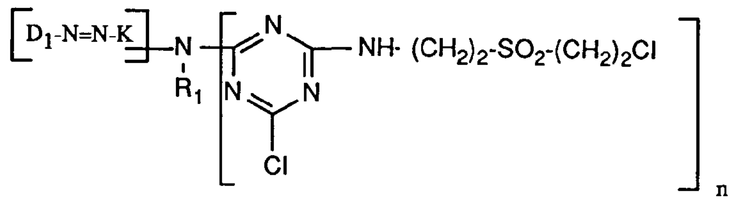

(2),

worin $D_1$ der Rest einer Diazokomponente der Benzol- oder Naphthalinreihe, K der Rest einer Kupplungskomponente der Benzol- oder Naphthalinreihe oder der heterocyclischen Reihe, wie z.B. der Pyrazolon-, 6-Hydroxypyridon-(2)- oder Acetessigsäurearylamidreihe, $R_1$ Wasserstoff, Methyl oder Ethyl, und n die Zahl 1 oder 2 ist, und der Reaktivrest an die Diazokomponente oder an die Kupplungskomponente gebunden ist, oder je ein Reaktivrest an die Diazokomponente und an die Kupplungskomponente gebunden ist.

Ebenfalls besonders bevorzugt sind die Reaktivfarbstoffe der Formel (2), worin $D_1$-N=N-K der Rest eines 1:1-Kupferkomplexazofarbstoffes ist, und $D_1$ der Rest einer Diazokomponente der Benzol- oder Naphthalinreihe, K der Rest einer Kupplungskomponente der Benzol- oder Naphthalinreihe, $R_1$ Wasserstoff, Methyl oder Ethyl, und n die Zahl 1 oder 2 ist, und der Reaktivrest an die Diazokomponente oder an die Kupplungskomponente gebunden ist, oder je ein Reaktivrest an die Diazokomponente und an die Kupplungskomponente gebunden ist.

Wichtig sind

h) Reaktivfarbstoffe gemäss d), worin D der Rest eines Formazanfarbstoffes der Formel

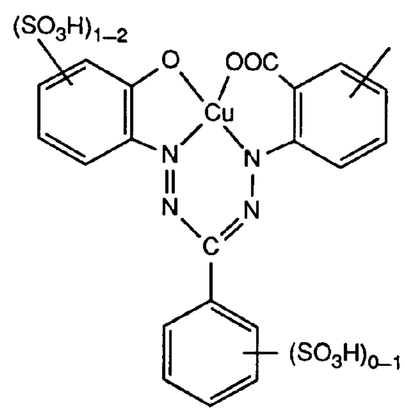

(3a)

oder

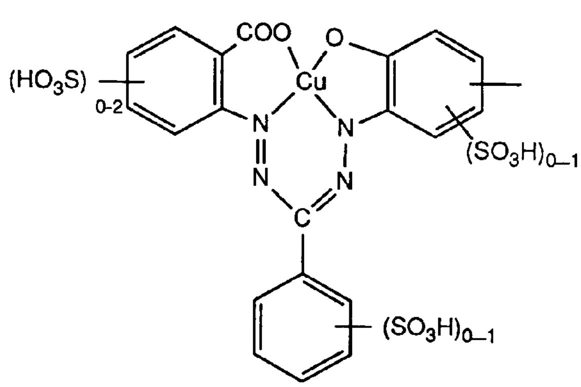

(3b)

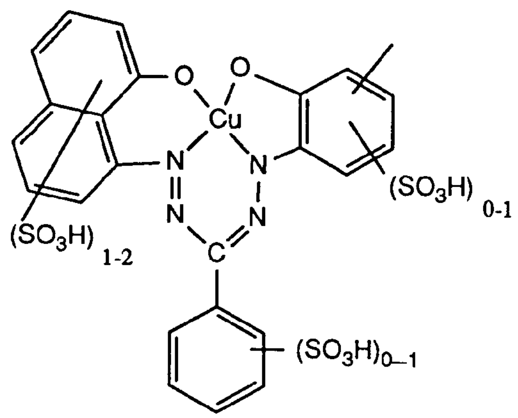

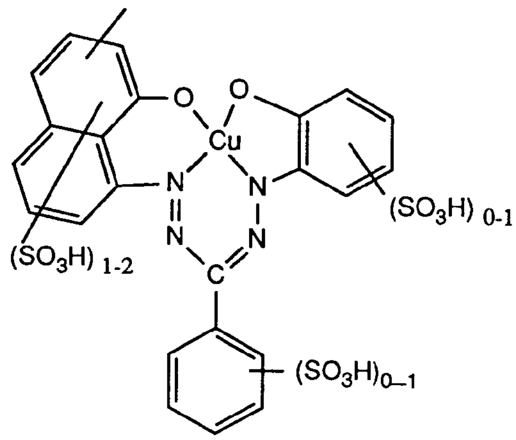

(3c) oder (3d)

ist, worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen oder Carboxy substituiert sein können.

i) Reaktivfarbstoffe gemäss e), worin D der Rest eines Anthrachinonfarbstoffes der Formel

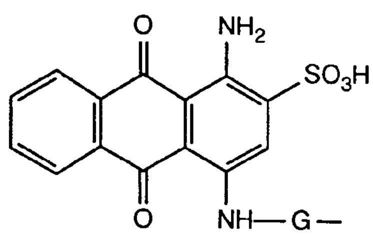

(4)

ist, worin G ein Phenylen-, Cyclohexylen-, Phenylenmethylen- oder $C_2$-$C_6$-Alkylenrest ist; wobei der Anthrachinonkern durch eine weitere Sulfogruppe, und G als Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 Sulfogruppen enthält.

j) Reaktivfarbstoffe gemäss e), worin D der Rest eines Phthalocyaninfarbstoffes der Formel

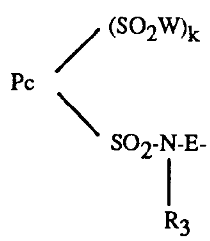

(5)

ist, worin Pc der Rest eines Kupfer- oder Nickelphthalocyanins; W -OH und/oder $-NR_4R_5$; $R_4$ und $R_5$ unabhängig voneinander Wasserstoff oder Alkyl mit 1 bis 4 Kohlenstoffatomen, das durch Hydroxy oder Sulfo substituiert sein kann; $R_3$ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Ethylenrest; und k = 1, 2 oder 3 ist.

k) Reaktivfarbstoffe gemäss e), worin D der Rest eines Dioxazinfarbstoffes der Formel

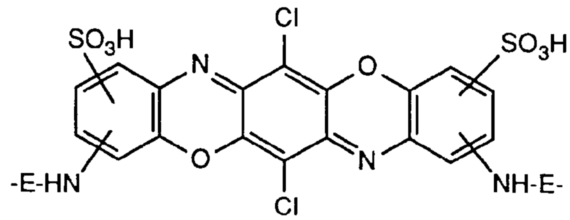

(6a)

oder

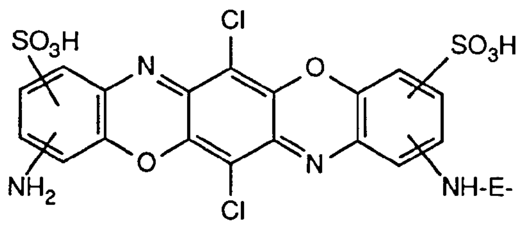

(6b)

oder

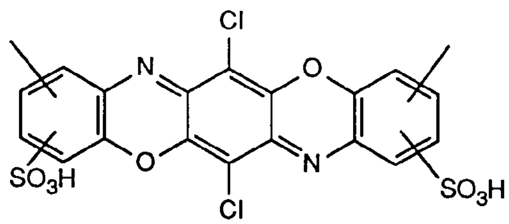

(6c)

ist, worin E ein Phenylenrest, der durch Alkyl mit 1 bis 4 C-Atomen, Halogen, Carboxy oder Sulfo substituiert sein kann; oder ein Alkylenrest mit 2 bis 6 C-Atomen ist; und die äusseren Benzolringe in den Formeln (6a) (6b) und (6c) durch Alkyl mit 1 bis 4 C-Atomen, Alkoxy mit 1 bis 4 C-Atomen, Acetylamino, Nitro, Halogen, Carboxy oder Sulfo weitersubstituiert sein können.

Von den ganz besonders bevorzugten Reaktivfarbstoffen gemäss c) sind besonders wichtig die Farbstoffe der Formeln (1) und insbesondere (2), worin D bzw. $D_1$-N=N-K einen Farbstoffrest der nachfolgenden Formeln (7) bis ( 19)bedeutet:

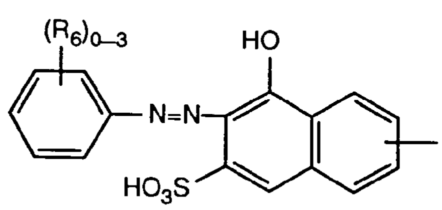

(7)

worin $R_6$ für $C_1$-$C_4$-Alkyl, $C_1$-$C_4$-Alkoxy, Halogen, -$SO_2$-Z, carboxy und Sulfo steht;

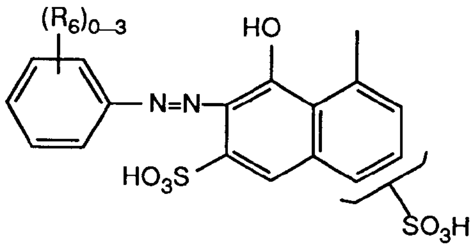

(8)

worin $R_6$ für $C_1$-$C_4$-Alkyl, $C_1$-$C_4$-Alkoxy, Halogen, Carboxy, Sulfo und $C_1$-$C_4$-Alkoxyanilino steht;

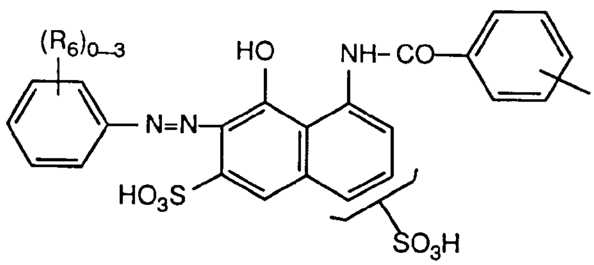

(9),

woring $R_6$ für $C_1$-$C_4$-Alkyl, $C_1$-$C_4$-Alkoxy, Halogen, Carboxy und Sulfo steht;

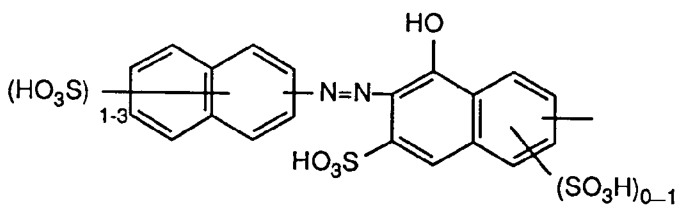

(10)

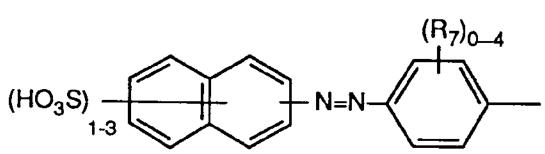

(11)

oder

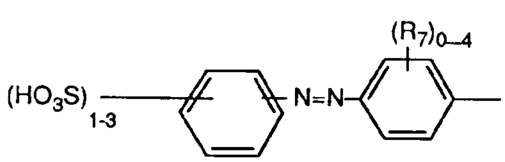

(12)

oder

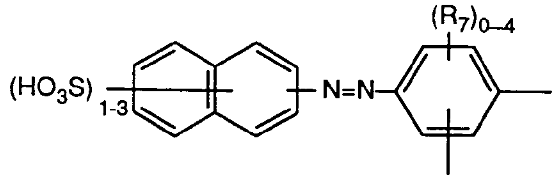

(13)

oder

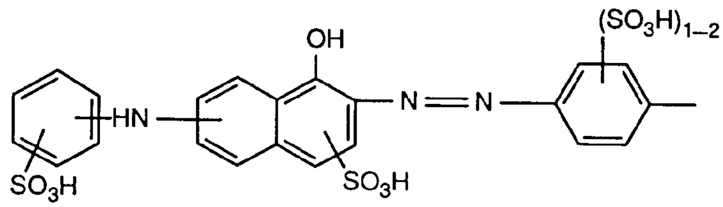

(14),

worin $R_7$ für Halogen, Nitro, Cyan, Trifluormethyl, Sulfamoyl, Carbamoyl, $C_1$-$C_4$-Alkyl, $C_1$-$C_4$-Alkoxy, Amino, Acetylamino, Ureido, Hydroxy, Carboxy, Sulfomethyl und Sulfo steht;

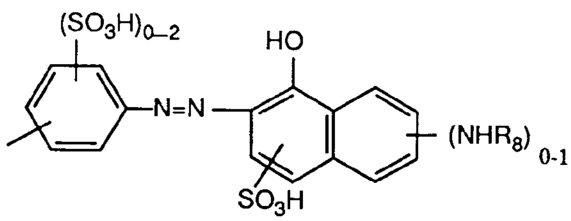

(15)

oder

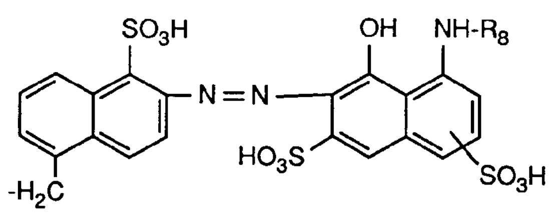

(16),

worin $R_8$ $C_1$-$C_4$-Alkanoyl oder Benzoyl ist;

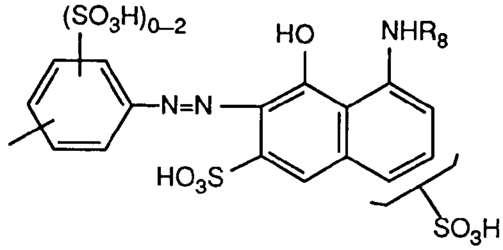

(17),

worin $R_8$ $C_1$-$C_4$-Alkanoyl oder Benzoyl ist;

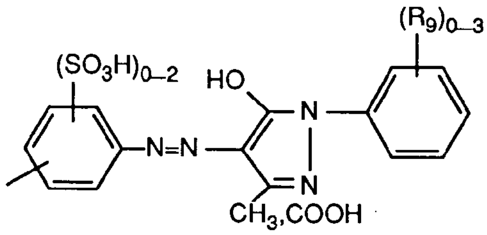

(18),

worin $R_8$ für $C_1$-$C_4$-Alkyl, $C_1$-$C_4$-Alkoxy, Halogen, Carboxy und Sulfo steht;

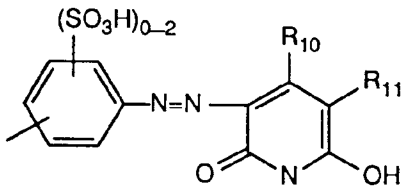

(19),

worin $R_{12}$ und $R_{10}$ unabhängig voneinander Wasserstoff, $C_1$-$C_4$-Alkyl oder Phenyl, und $R_{11}$ Wasserstoff, Cyano, Carbamoyl oder Sulfomethyl ist;

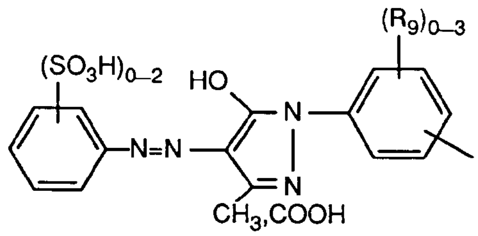

(20),

worin $R_8$ für $C_1$-$C_4$-Alkyl, $C_1$-$C_4$-Alkoxy, Halogen, Carboxy und Sulfo steht;

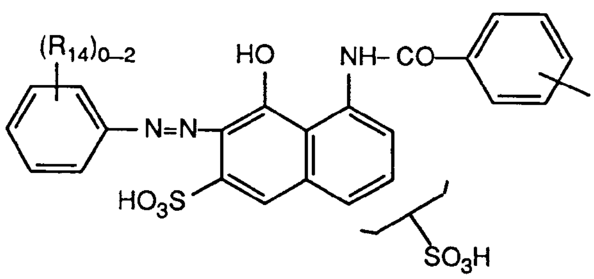

(21),

worin $R_{14}$ für $C_1$-$C_4$-Alkyl, $C_1$-$C_4$-Alkoxy, Halogen, Carboxy und Sulfo steht; wobei der oben genannte Disclaimer gilt.

Besonders wichtig sind ausserdem Schwermetallkomplexe von Reaktivfarbstoffen der Formel (1); als komplexbildende Schwermetalle kommen vor allem Kupfer, Nickel, Kobalt oder Chrom in Betracht. Bevorzugt sind Kupferkomplexazofarbstoffe, insbesondere solche der Formeln (7) bis (21), die das Kupferatom über ein Sauerstoffatom je in ortho-Position zur Azobrücke gebunden enthalten.

Beispiele für Azofarbstoffe, die sich als metallkomplexe eignen sind:

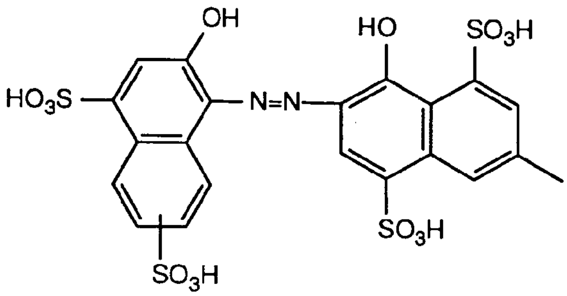

(22),

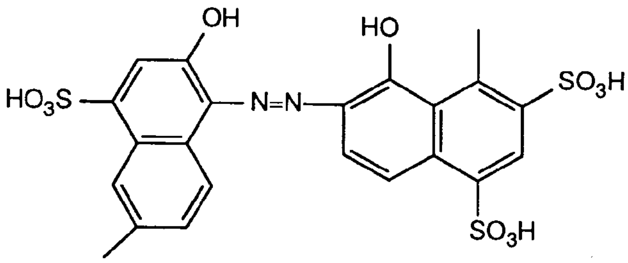

(23),

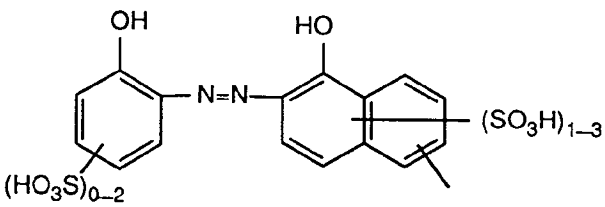

(24),

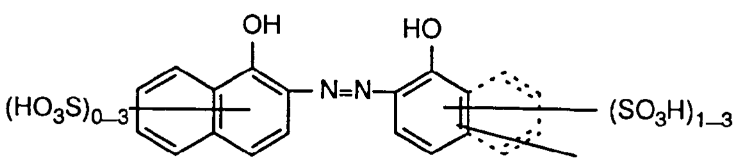

(25),

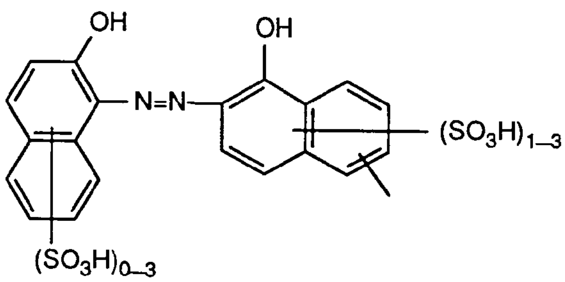

(26),

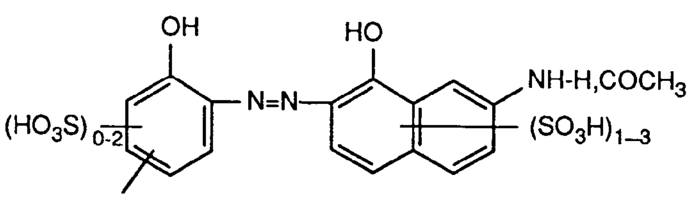

(27)

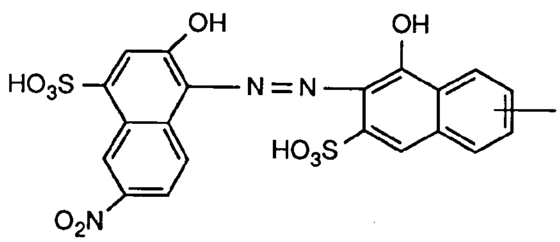

(28)

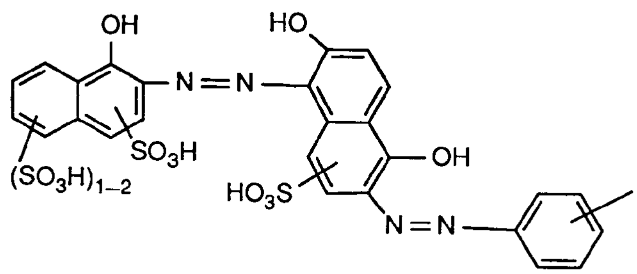

(29).

Als Metallatome sind Cu (1:1-Komplex) oder Cr und Co (1:2-Komplex) bevorzugt. Crund Co-Komplexe können die Azoverbindung der oben angegebenen Formel einmal oder zweimal enthalten, d.h. sie können symmetrisch oder mit beliebigen anderen Liganden unsymmetrisch aufgebaut sein.

Bevorzugt sind Kupferkomplexe wie z.B.

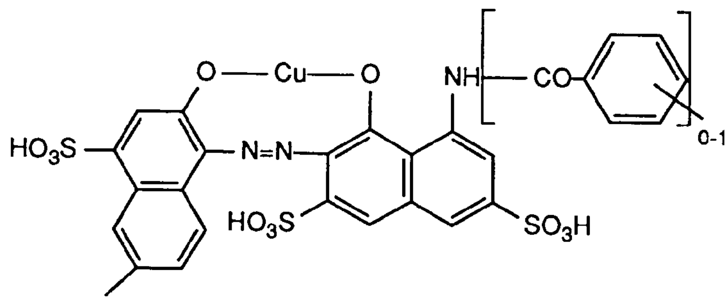

(30)

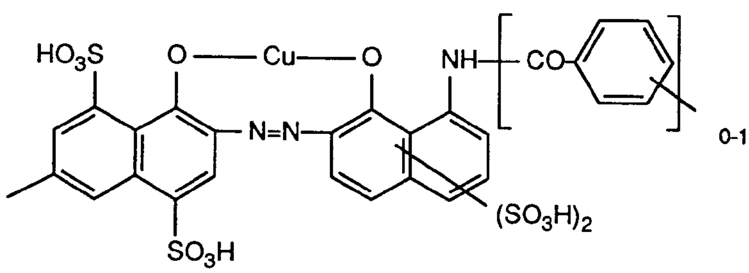

(31)

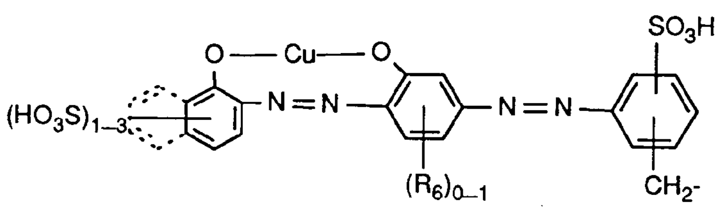

(32)

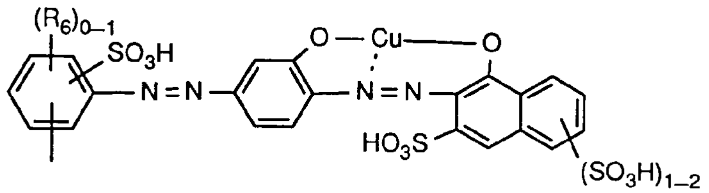

(33),

worin $R_6$ die unter Formel (7) angegebenen Bedeutungen hat.

Die aromatischen Ringe in den obigen Farbstoffen können weitersubstituiert sein, die Benzolringe vor allem durch Methyl, Ethyl, Methoxy, Ethoxy, Methylsulfonyl, Ethylsulfonyl, Carboxy, Acetylamino oder Chlor, und die Naphthalinringe insbesondere durch Methoxy, Carboxy, Acetylamino, Nitro oder Chlor. Vorzugsweise sind die Benzolringe nicht weitersubstituiert.

Gegenstand der Erfindung ist ferner ein Verfahren zur Herstellung von Reaktivfarbstoffen der Formel (1), welches dadurch gekennzeichnet ist, dass man einen organischen Farbstoff der Formel

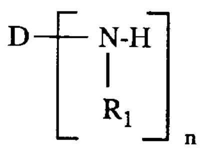

(34)

oder Farbstoffvorprodukte, mindestens ein Äquivalent eines Traizins der Formel

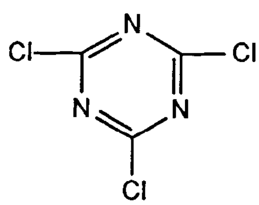

(35)

und mindestens ein Äquivalent eines Amins der Formel

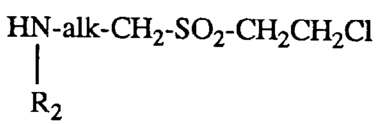

(36)

in beliebiger Folge zu einem Reaktivfarbstoff der Formel (1) kondensiert, wobei D, $R_1$, $R_2$, alk und n die unter Formel (1) angegebenen Bedeutungen haben, und dass man im Fall der Verwendung von Farbstoffvorprodukten, diese in die gewünschten Endfarbstoffe umwandelt.

Das molare Verhältnis der Ausgangsstoffe muss der Zusammensetzung des Endproduktes entsprechend gewählt werden, je nachdem ob nur ein Rest oder zwei Reste der Formel

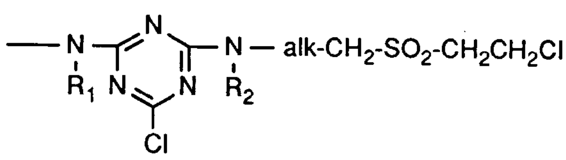

(1a)

in dem Reaktivfarbstoff der Formel (1) vorhanden sein sollen.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungen, die zu Azofarbstoffen führen.

Die Einführung eines Restes oder zweier Reste der Formel (1a) erfolgt in der Regel schrittweise.

Da die einzelnen oben angegebenen Verfahrensschritte in unterschiedlicher Reihenfolge, gegebenenfalls teilweise auch gleichzeitig, ausgeführt werden können, sind verschiedene Ausführungsformen möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Dabei hängt es von der Struktur der Ausgangsstoffe ab, welche der möglichen Ausführungsformen die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (34) und dem Triazin, oder aus einer Verbindung der Formel (36) und dem Triazin, zweckmässigerweise zuerst ausgeführt wird, die des Triazins mit der Verbindung der Formel (36) oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Die Reaktivfarbstoffe der Formel (1), worin der Rest der Formel (1a) zweimal vorhanden ist, werden hergestellt, indem man z.B. zwei Äquivalente Triazin der Formel (35) und zwei gleiche Aequivalente eines Amins der Formel (36) verwendet, oder in dem man je ein Aequivalent zweier verschiedener Amine der Formel (36) verwendet.

Eine weitere Ausführungsform des erfindungsgemässen Verfahrens ist dadurch gekennzeichnet, dass man einen Farbstoff der Formel (34) zunächst mit einem s-Triazins der Formel (35) kondensiert, und die erhaltene Verbindung der Formel

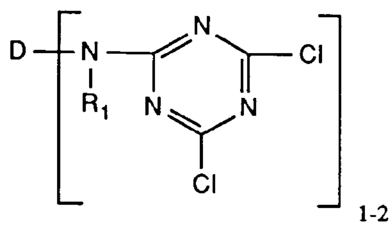

(37)

anschliessend mit einer Verbindung der Formel (36) zu einem Reaktivfarbstoff der Formel (1) kondensiert, wobei D, $R_1$ und alk die oben angegebenen Bedeutungen haben.

Nach einer weiterer Ausführungsform des erfindungsgemässen Verfahrens können Reaktivfarbstoffe der Formel (1) hergestellt werden, indem man eine Komponente dieses Farbstoffes, die z.B. mindestens einen Rest der Formel (1a) enthält, mit einer zur Herstellung des Farbstoffs benötigt zweiten Komponente, die gegebenenfalls einen Rest der Formel (1a) enthält, umsetzt.

Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1a) enthalten, ausgeht, oder diese faserreaktiven Reste in hierfür geeignete Zwischenprodukte mit Farbstoffcharakter einführt.

Bevorzugt sind Reaktivfarbstoffe der Formel (1), worin D der Rest eines Monoazofarbstoffes oder eines Metallkomplexazofarbstoffes ist. In diesem Falle sind die Reste der Formel (1a) an die Diazo-und/oder Kupplungskomponenten gebunden. Falls in einem Reaktivfarbstoff der Formel (1) zwei Reste der Formel (1a) enthalten sind, ist vorzugsweise je ein Rest der Formel (1a) an eine Komponente, d.h. an eine Diazokomponente oder Kupplungskomponente, gebunden. Die Reaktivfarbstoffe haben somit z.B. die Formeln

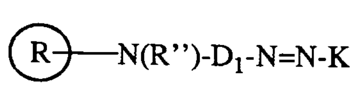

(38)

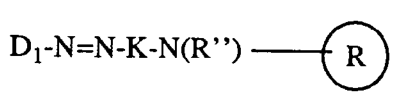

(39)

und

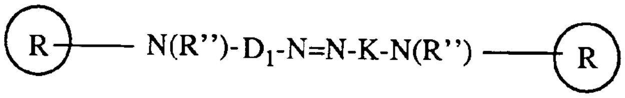

(40)

worin R″ die gleiche Bedeutung hat wie $R_1$ in der Formel (1), $D_1$ der Rest einer Diazokomponente, und K der Rest einer Kupplungskomponente ist, und ® einen Reaktivrest der Formel (1a) bedeutet.

Falls man von Farbstoffvorprodukten ausgeht, gelangt man z.B. zu den Reaktivfarbstoffen der Formel (1), indem man eine Komponente des Farbstoffes der Formel (34), die eine Gruppe $-N(R_1)H$ enthält, und ein Triazin der Formel (35) kondensiert, und vorher oder nachher mit einer Verbindung der Formel (36) kondensiert. Bei der Herstellung der bevorzugten Azofarbstoffe müssen die Diazokomponenten und die Kupplungskomponenten zusammen mindestens eine Aminogruppe $-N(R_1)H$, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino-oder Nitroverbindungen, worin die Acetylamino- bzw. Nitrogruppe vor der Kondensation mit dem Triazin der Formel (35) durch Verseifen bzw. Reduzieren in die $H_2N$-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho'-Stellung zur Azobrücke komplexbildende Gruppen, z.B. Hydroxy-oder Carboxygruppen, enthalten, vor oder gegebenenfalls auch nach der Kondensation mit dem Triazin der Formel (35) mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxydative Kupferung in Betracht.

Die wichtigsten Verfahrensvarianten sind in den Ausführungsbeispielen dargestellt.

Die Kondensation des s-Triazins der Formel (35) mit den organischen Farbstoffen der Formel (34) bzw. den eine Gruppe $-N(R_1)H$ enthaltenden diazotierbaren und/oder kupplungsfähigen Komponenten erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Verbindungen der Formeln (33) oder (34) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natriumcarbonat, in einem pH-Bereich von 2 bis 8 bevorzugt 5 bis 6,5, durchgeführt.

Die Kondensation des Halogentriazins mit einer Verbindung der Formel (36) kann vor oder nach der Kondensation des Halogentriazins mit einem Farbstoff der Formel (34) geschehen. Die Kondensation des Halogentriazins mit einer Verbindung der Formel (34) oder (36) erfolgt vorzugsweise in wässriger Lösung oder Suspension, bei niedriger Temperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen

mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Falls die Reaktivfarbstoffe der Formel (1), worin D der Rest eines Anthrachinonfarbstoffes ist, eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen z.B. ein Naphthalinsulfonsäure-Formaldehyd- Kondensat oder insbesondere Anthrachinon-2-sulfonsäure, behoben werden.

Die Reaktivfarbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1:

18,5 Teile 2,4,6-Trichlor- 1,3,5-triazin werden in 200 Teilen Eis und Wasser in Gegenwart eines Netzmittels gut verrührt. Zu dieser Suspension tropft man bei einem pH-Wert von 7 im Verlauf einer Stunde eine neutrale Lösung von 54,5 Teilen des Aminoazofarbstoffes 2-(2′-Ureido-4′-amino-phenylazo)-naphthalin-3,6,8-trisulfonsäure in 400 Teilen Wasser. Der freiwerdende Chlorwasserstoff wird durch Zutropfen von 2N Natriumhydroxidlösung neutralisiert. Sobald chromatographisch kein Ausgangsfarbstoff mehr nachweisbar ist, werden 21,8 Teile β-(β′-Chlorethylsulfonyl)-ethylamin-hydrochlorid zugegeben. Unter ständigem Neutralisieren des freigesetzten Chlorwasserstoffs mit 2N Natriumcarbonatlösung und Erhöhen der Temperatur auf 30 bis 35° wird ein pH-Wert von 6,5 bis 7 eingehalten. Nach drei Stunden ist die Umsetzung beendet, worauf der Farbstoff der in Form der freien Säure der Formel

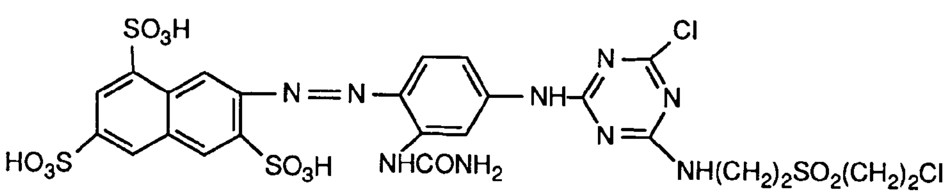

(100)

entspricht, durch Zugabe von NaCl ausgesalzen, dann abfiltriert, getrocknet und gemahlen wird. Alternativ kann die Farbstofflösung der Umkehrosmose unterworfen und anschliessend zur Trockne eingeengt werden. Das erhaltene orange Farbstoffpulver löst sich in Wasser mit rotgelber Farbe und färbt Baumwolle oder regenerierte Cellulose in rotstichig gelben Tönen mit sehr guten Allgemeinechtheiten.

Verwendet man anstelle des β-(β′-Chlorethylsulfonyl)-ethylamins eine äquivalente Menge eines der folgenden Amine, so erhält man gleichfalls wertvolle Farbstoffe, die Baumwolle nach den für Reaktivfarbstoffen üblichen Färbemethoden in echten rotstichig gelben Tönen färben:

$H_2N-CH_2CH_2CH_2-SO_2-CH_2CH_2Cl$,

$H_2N-CH_2CH_2CH_2CH_2-SO_2-CH_2CH_2Cl$,

$H_2N-CH_2CH_2CH_2CH_2CH_2-SO_2-CH_2CH_2Cl$,
$H_2N-CH_2CH_2CH_2CH_2CH_2CH_2-SO_2-CH_2CH_2Cl$,

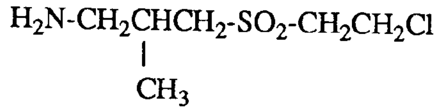

.

Wenn man nach den Angaben von Beispiel 1 verfährt, jedoch anstelle des dort verwendeten Aminoazofarbstoffes äquivalente Mengen der in der nachfolgenden Tabelle aufgeführten Aminoazofarbstoffe und die oben angegebenen Amine verwendet, so erhält man gleichfalls wertvolle Farbstoffe, die Baumwolle in echten Tönen mit guter färberischer Ausbeute färben.

| I | II |
|---|---|
| 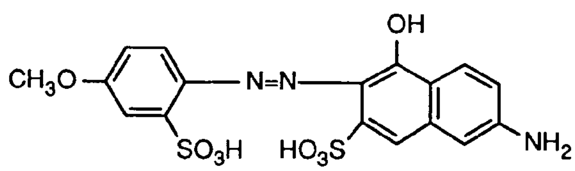 | scharlach |
| 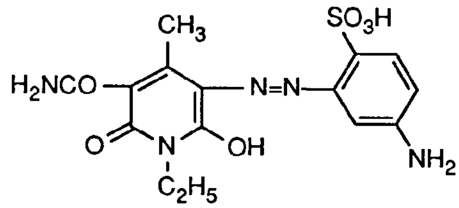 | grünstichig gelb |
| 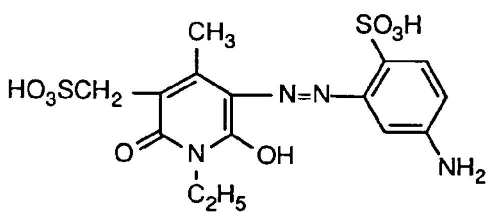 | grünstichig gelb |
| 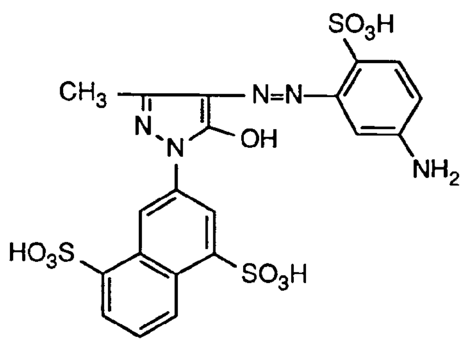 | gelb |
| 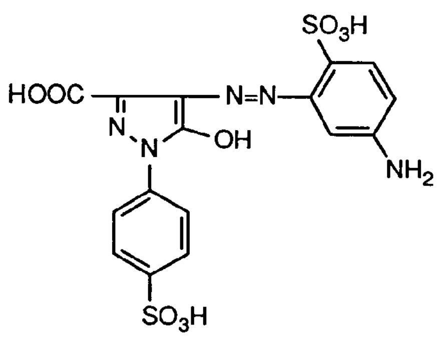 | gelb |

| I | II |
|---|---|
| 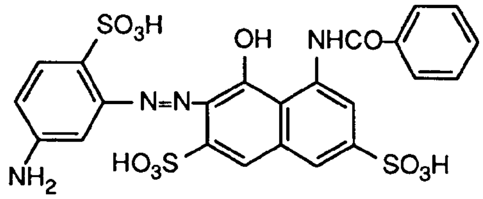 | blaustichig rot |
| 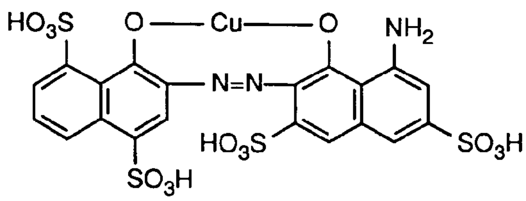 | blau |
| 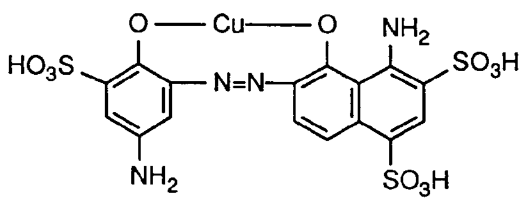 | rotstichig blau |
| 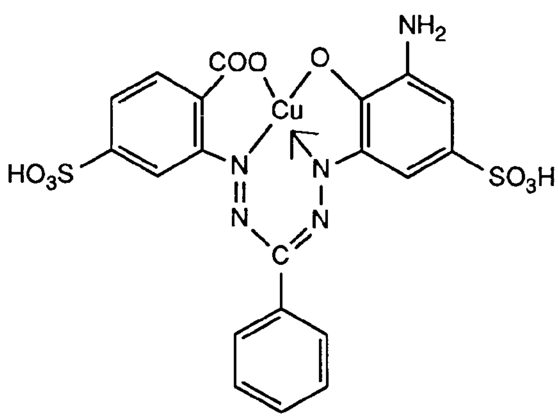 | blau |
| 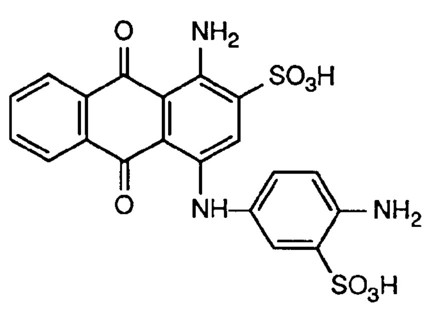 | grünstichig blau |

| I | II |
|---|---|
| 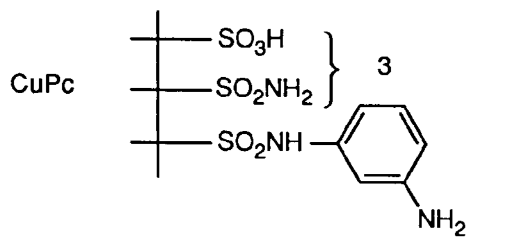 | türkis |
| 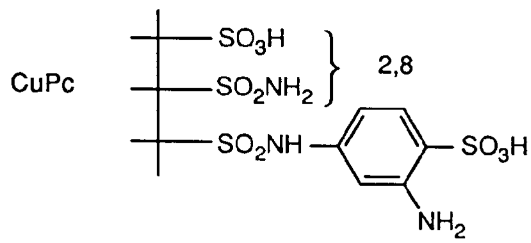 | türkis |
| 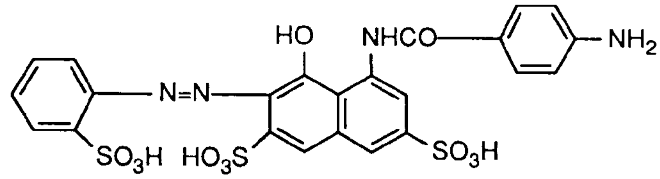 | rot |
| 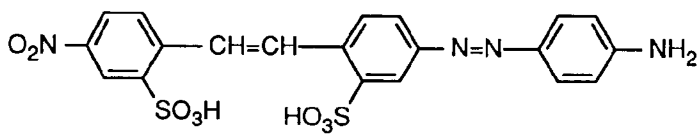 | gelb |
| 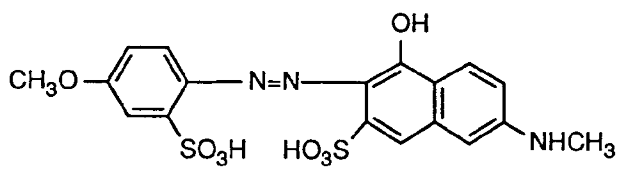 | scharlach |
| 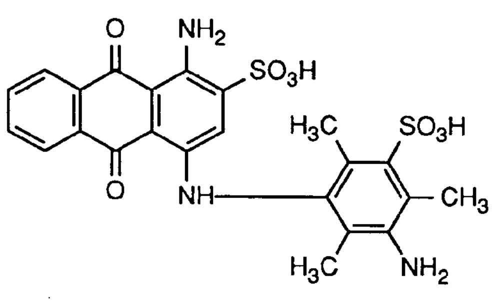 | königsblau |

| I | II |
|---|---|
| 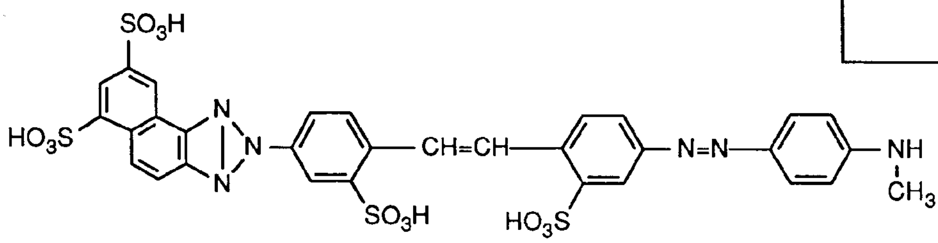 | gelb |
| 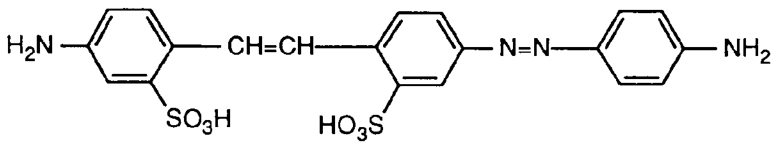 | gelb |
| 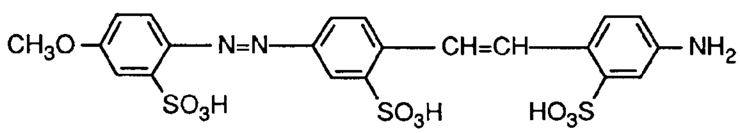 | gelb |
| 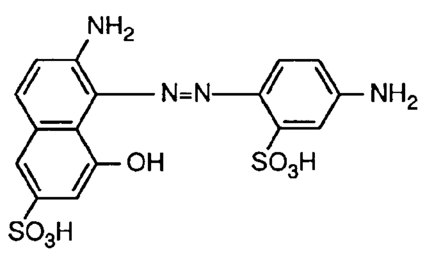 | blaustichig rot |
| 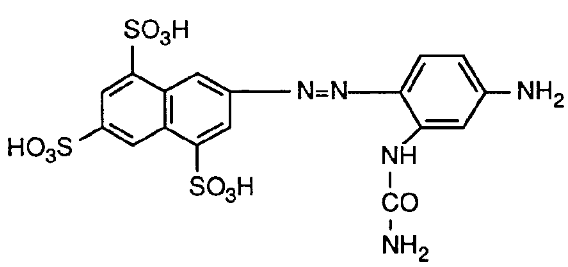 | goldgelb |

| I | II |
|---|---|
| 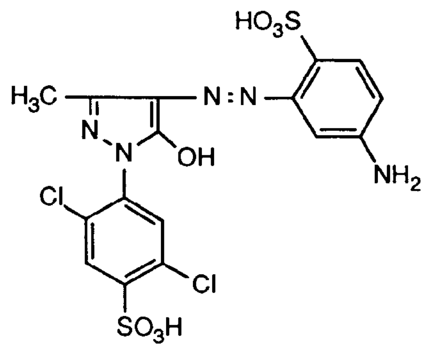 | grünstichig gelb |
| 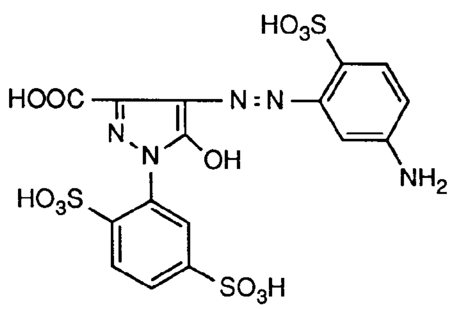 | grünstichig gelb |
| 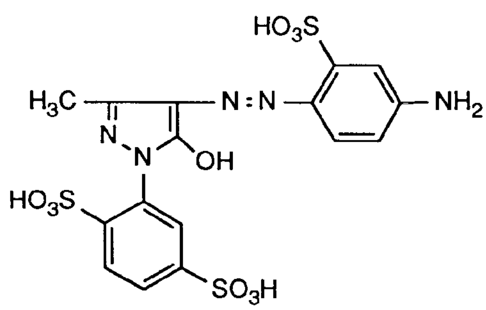 | goldgelb |
| 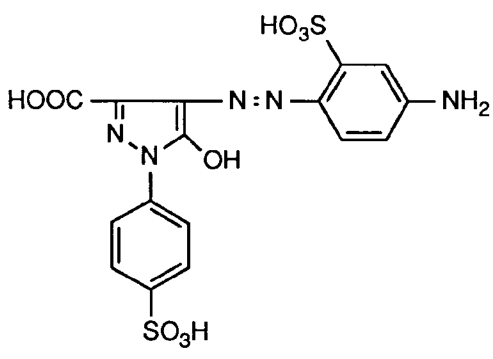 | goldgelb |

| I | II |
|---|---|
| 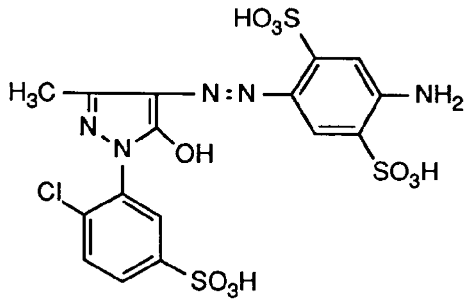 | goldgelb |
| 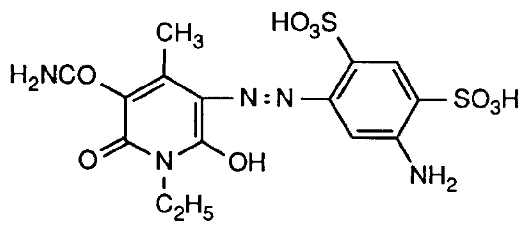 | grünstichig gelb |
| 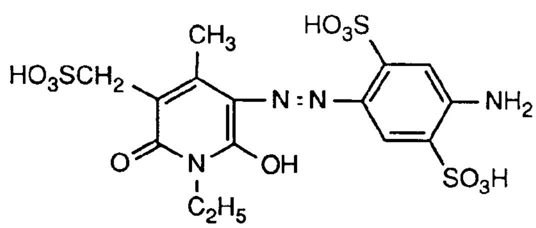 | goldgelb |
| 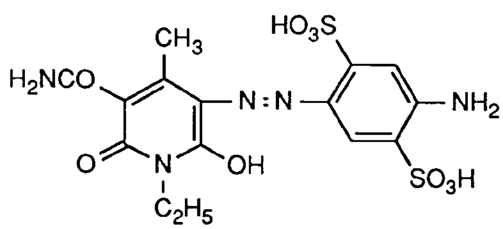 | goldgelb |
| 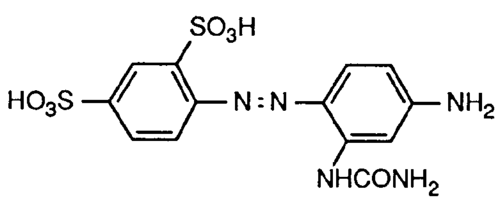 | goldgelb |
| 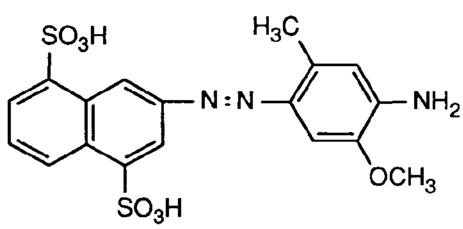 | goldgelb |

| I | II |
|---|---|
| 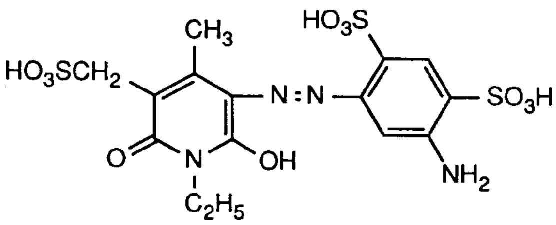 | grünstichig gelb |
| 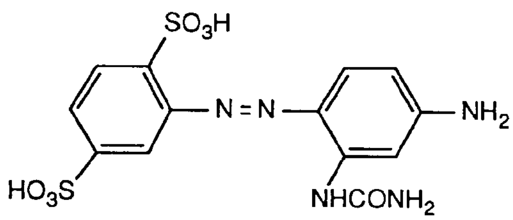 | goldgelb |
| 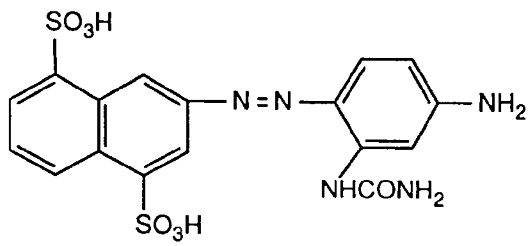 | goldgelb |
| 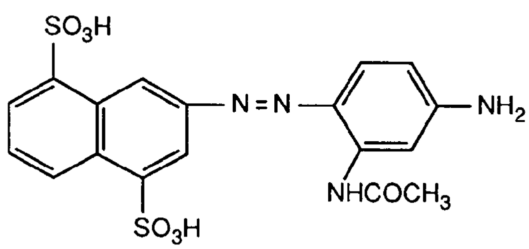 | goldgelb |
| 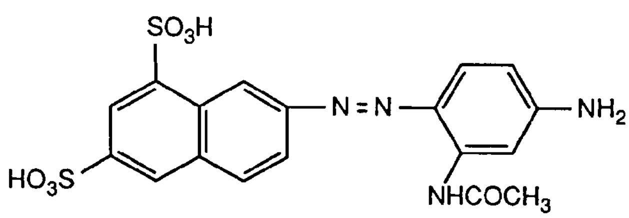 | goldgelb |
| 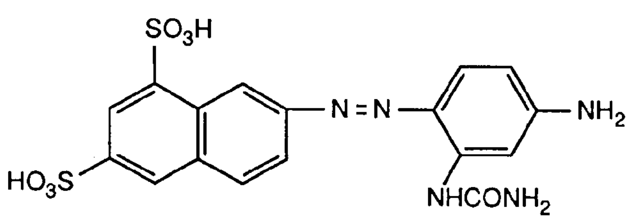 | goldgelb |

| I | II |
|---|---|
| 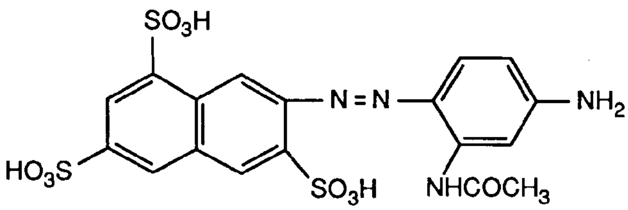 | goldgelb |
| 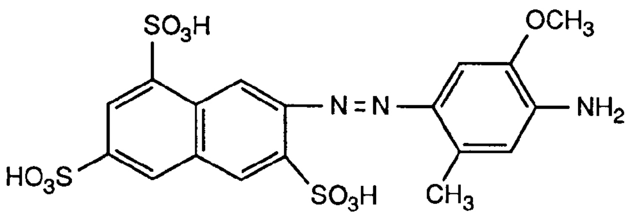 | goldgelb |
| 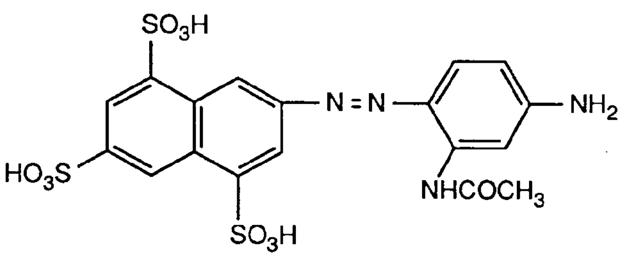 | goldgelb |
| 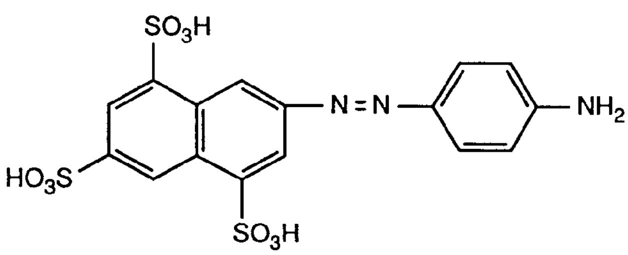 | goldgelb |

| I | II |
|---|---|
| 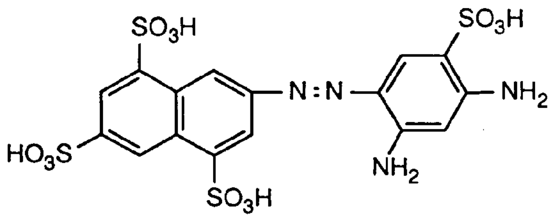 | goldgelb |
| 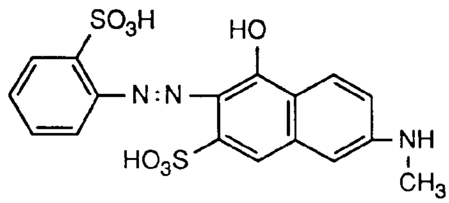 | goldgelb |
| 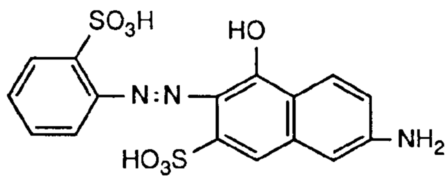 | goldgelb |
| 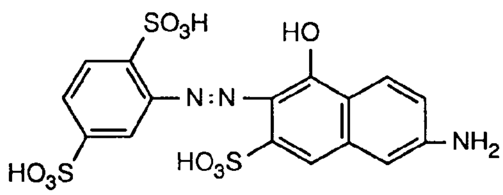 | orange |
| 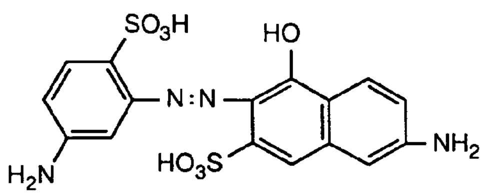 | orange |
| 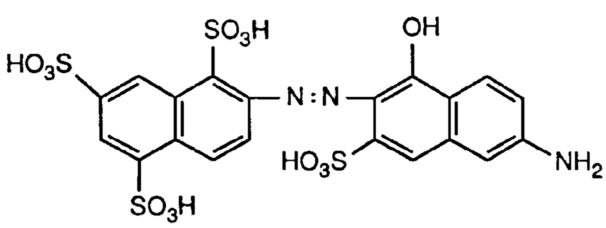 | orange |

| I | II |
|---|---|
| 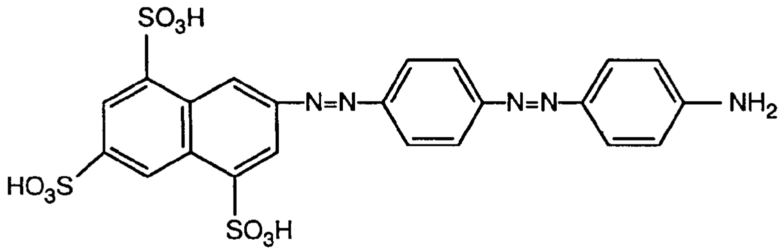 | orange |
| 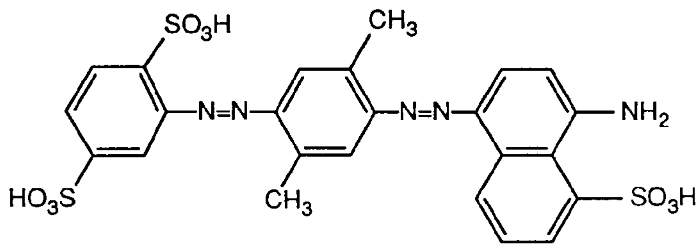 | orange |
| 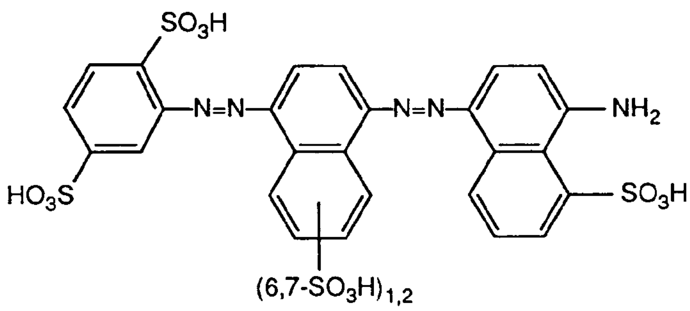 | braun |
| 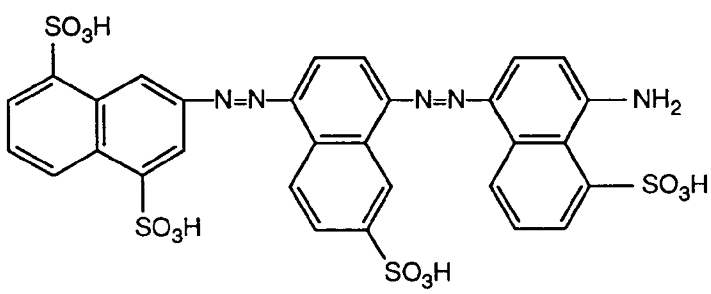 | braun |
| 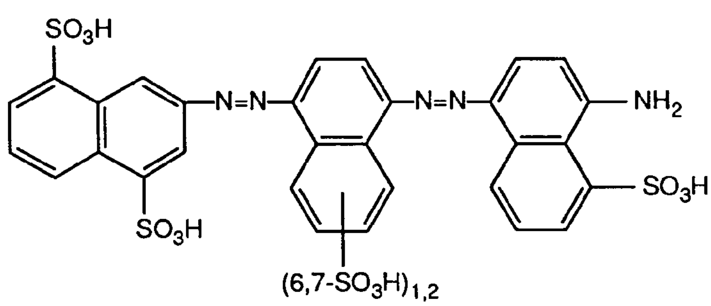 | braun |

| I | II |
|---|---|
| 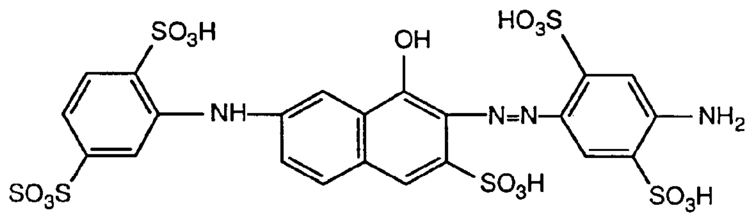 | braun |
| 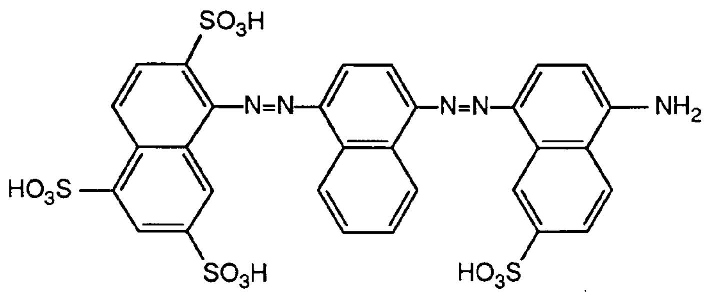 | braun |
| 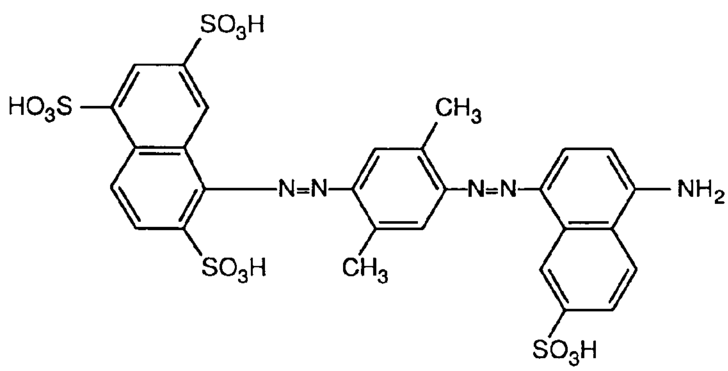 | braun |
| 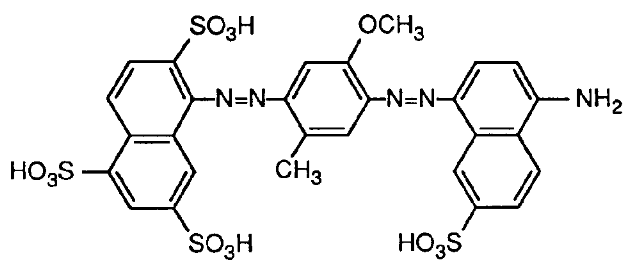 | braun |
| 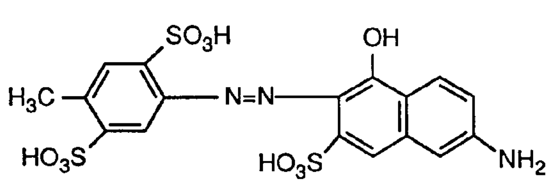 | orange |

| I | II |
|---|---|
| 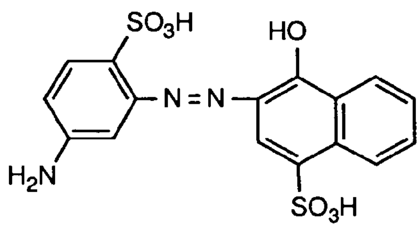 | scharlach |
| 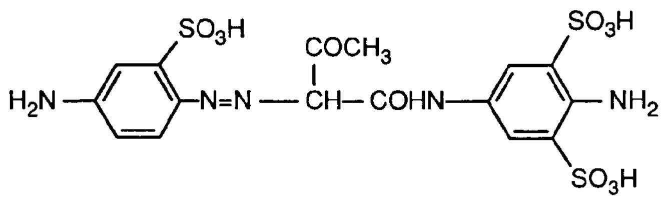 | gelb |
| 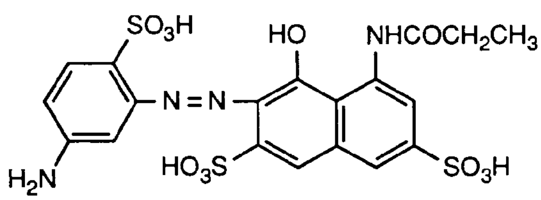 | gelbstichig rot |
| 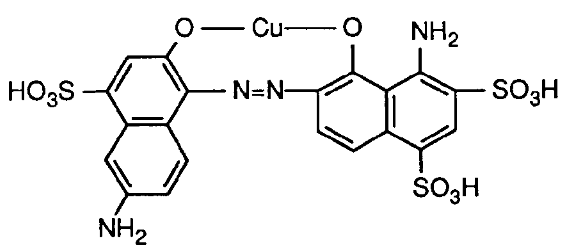 | blau |
| 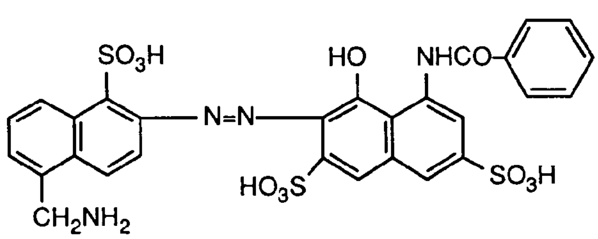 | blaustichig rot |

| I | II |
|---|---|
| 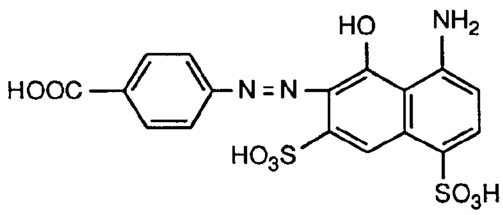 | gelbstichig rot |
| 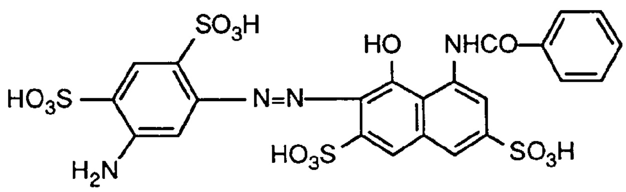 | rot |
| 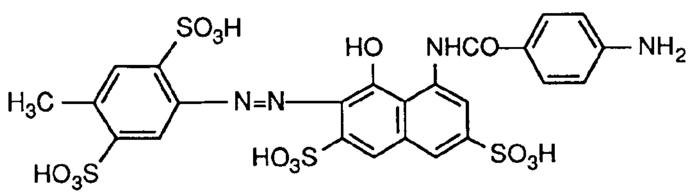 | rot |
| 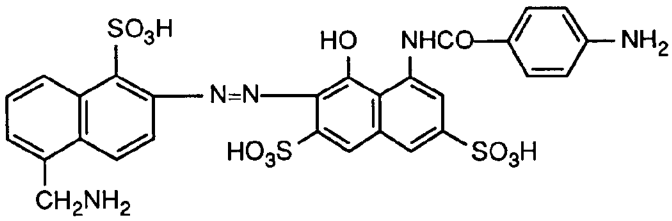 | blaustichig rot |
| 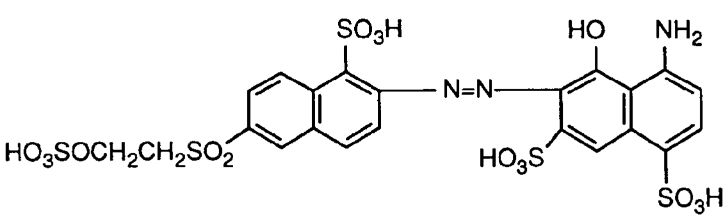 | rot |

| I | II |
|---|---|
| 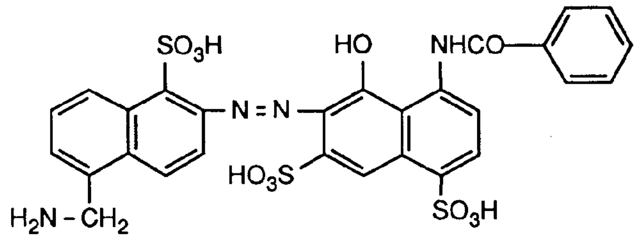 | blaustichig rot |
| 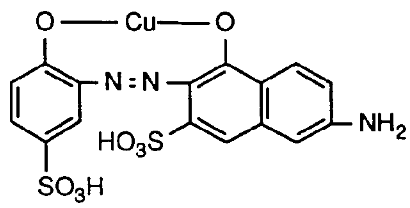 | rubin |
| 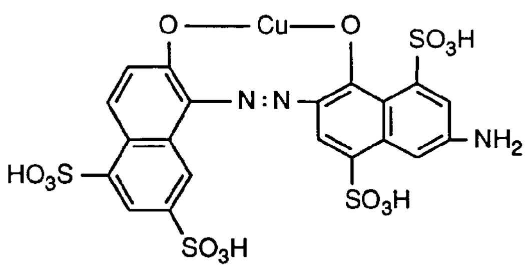 | violett |
| 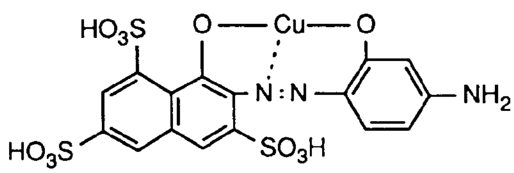 | violett |
| 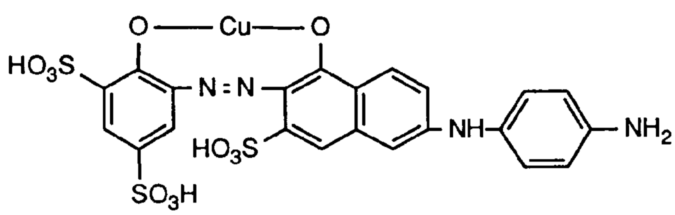 | violett |
| 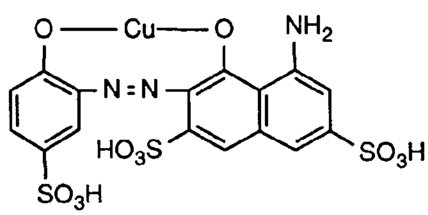 | violett |

| I | II |
|---|---|
| 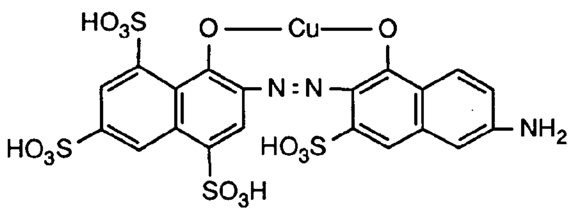 | violett |
| 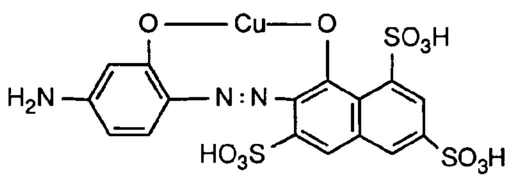 | violett |
| 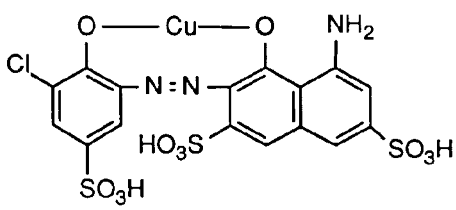 | violett |
| 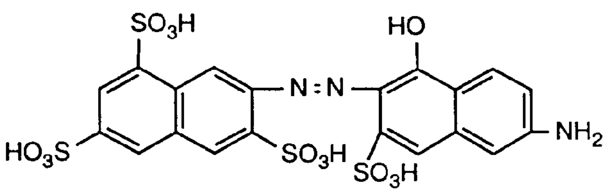 | orange |
| 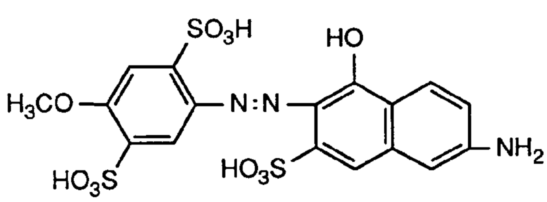 | scharlach |
| 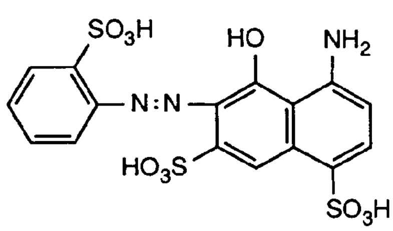 | scharlach |

| I | II |
|---|---|
| 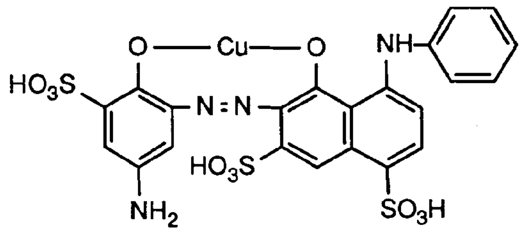 | marineblau |
| 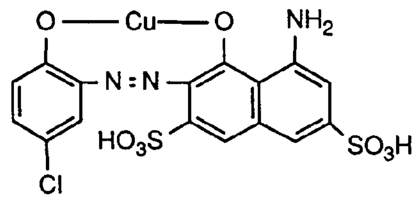 | marineblau |
| 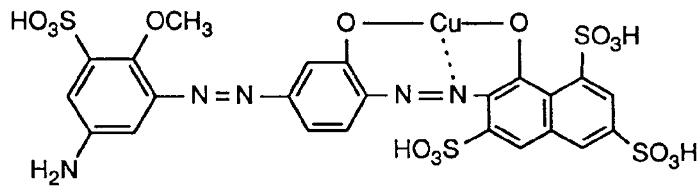 | marineblau |
| 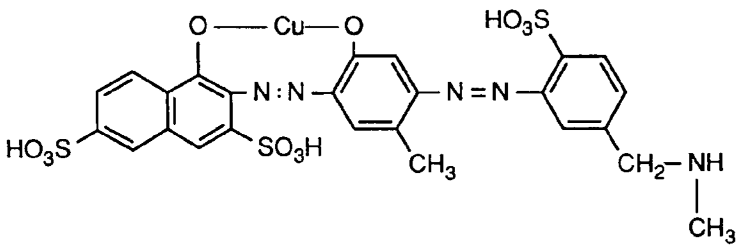 | marineblau |
| 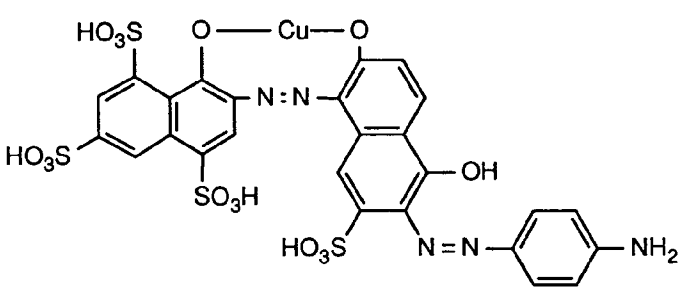 | marineblau |

| I | II |
|---|---|
| 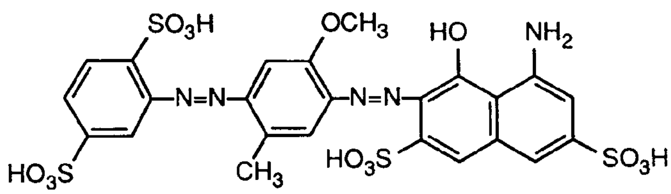 | marineblau |
| 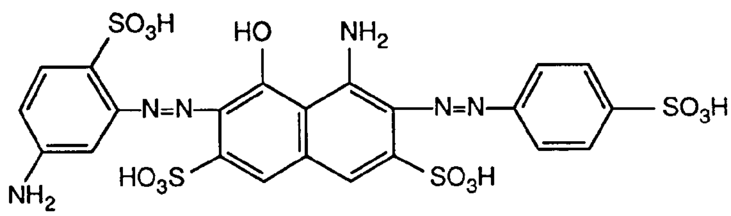 | dunkelblau |
| 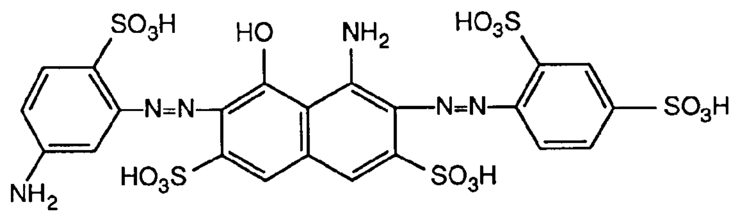 | marineblau |
| 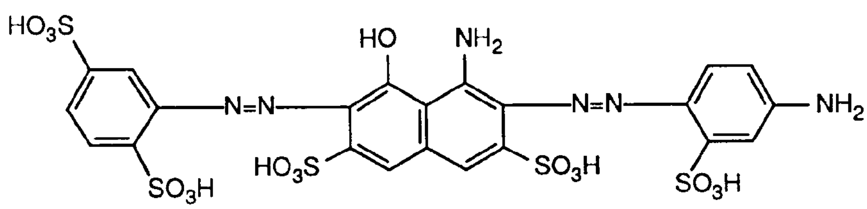 | grünblau |
| 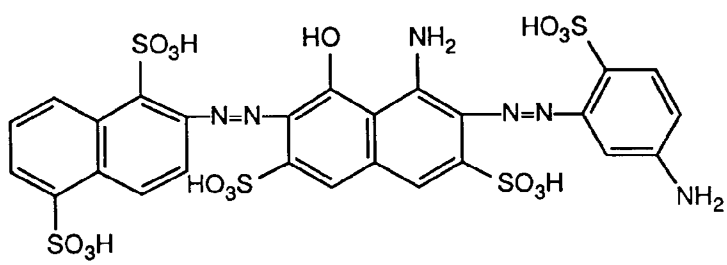 | marineblau |
| 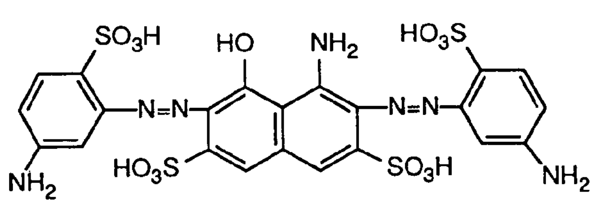 | grünstichig blau |

| I | II |
| --- | --- |
| 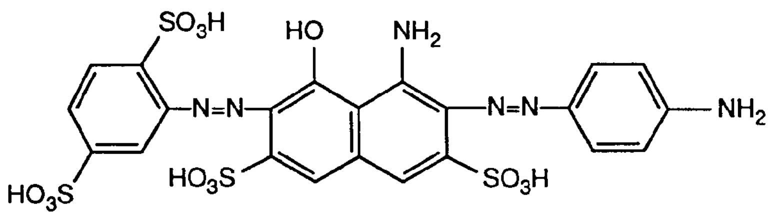 | marineblau |
| 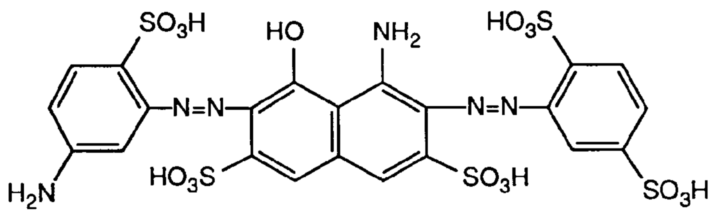 | marineblau |
| 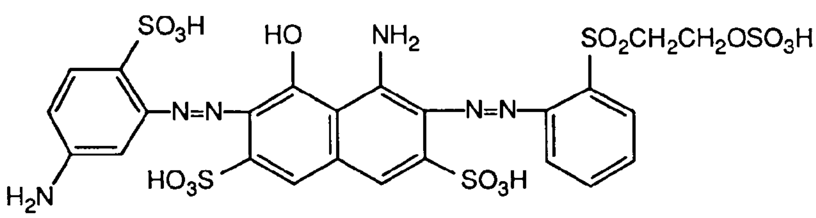 | marineblau |
| 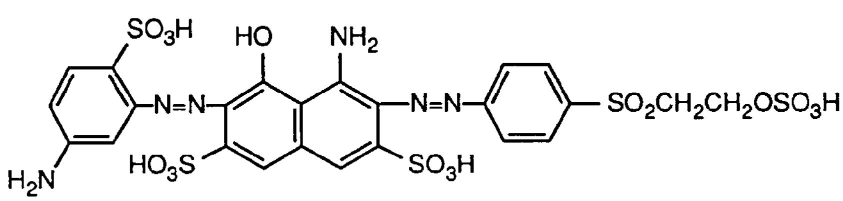 | marineblau |
| 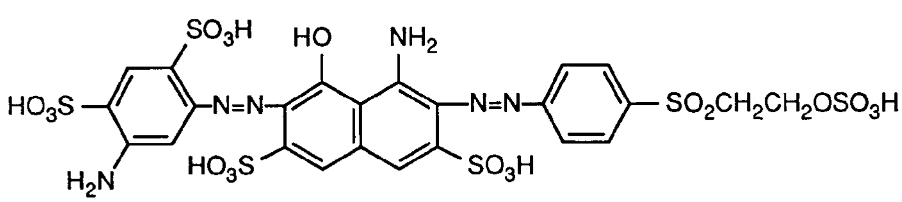 | marineblau |

| I | II |
|---|---|
| 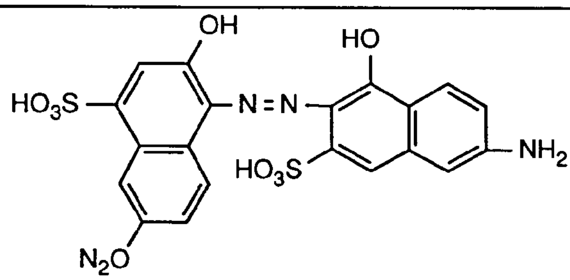 $^1/_2$ Cr - $^1/_3$Co-Mischkomplex | marineblau |
| 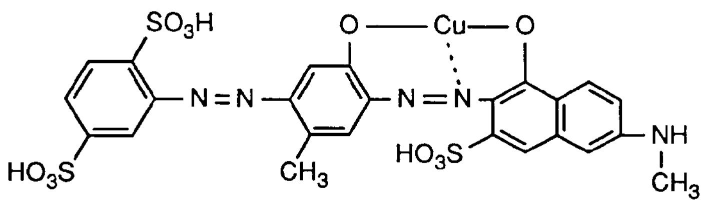 | marineblau |
| 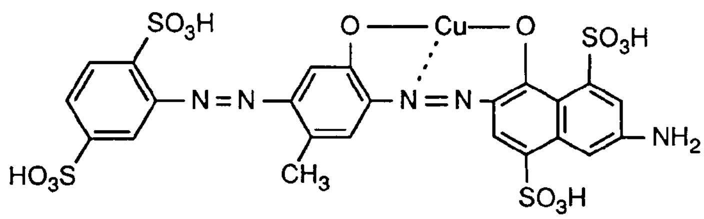 | blau |
| 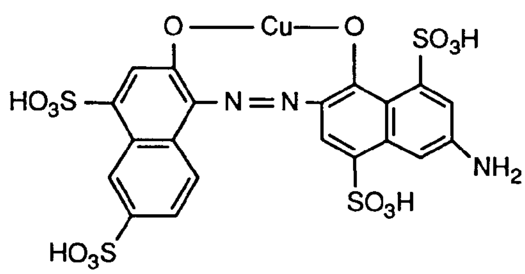 | blau |
| 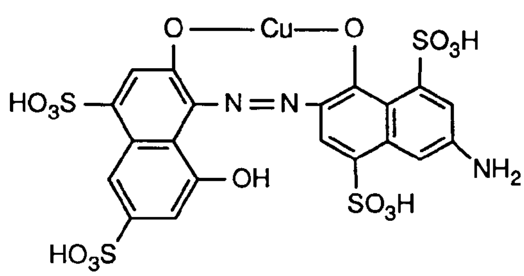 | blau |

| I | II |
|---|---|
| 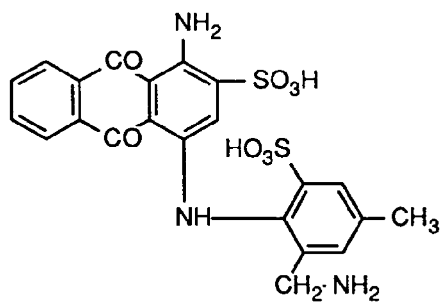 | blau |
| 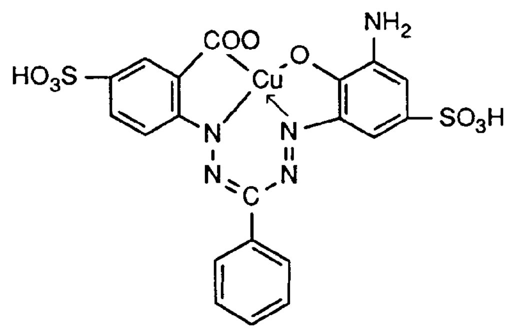 | blau |
| 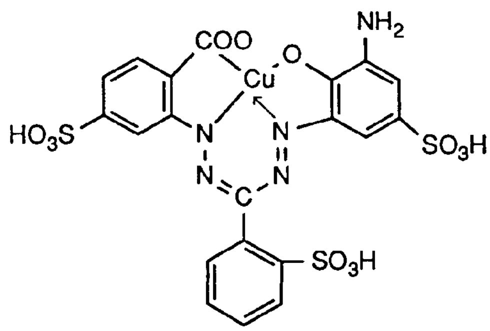 | blau |
| 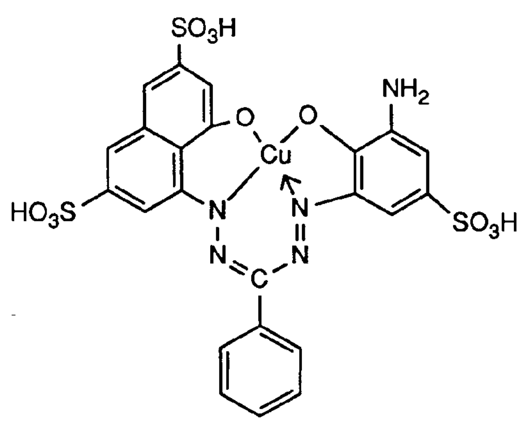 | blau |

| I | II |
| --- | --- |
| 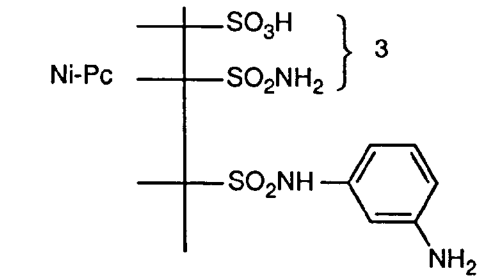 | grün |
| 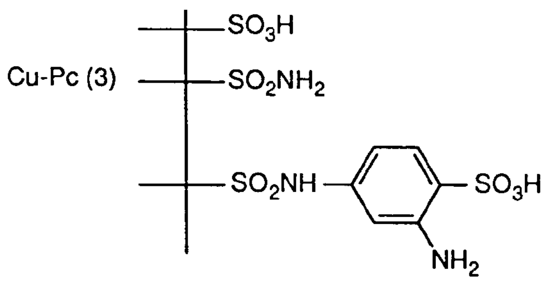 | türkis |
| 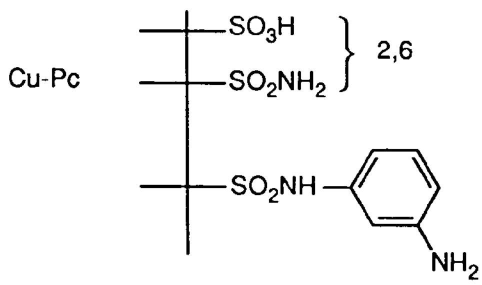 | türkis |
| 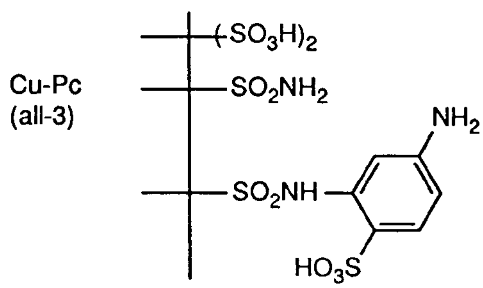 | türkis |
| 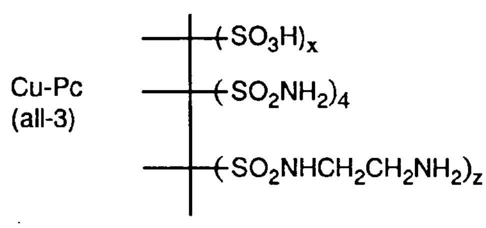 | türkis |

| I | II |
|---|---|
| 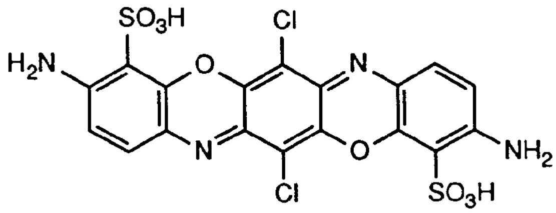 | blau |
| 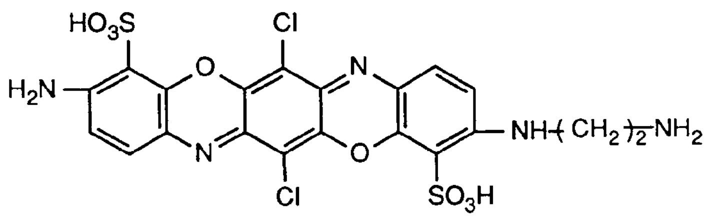 | blau |
| 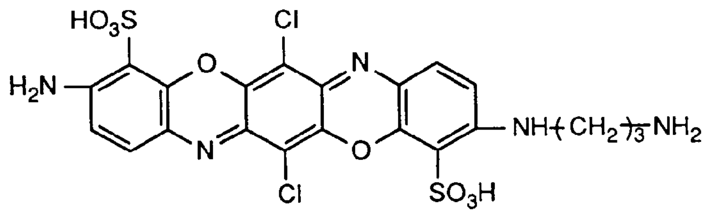 | blau |
| 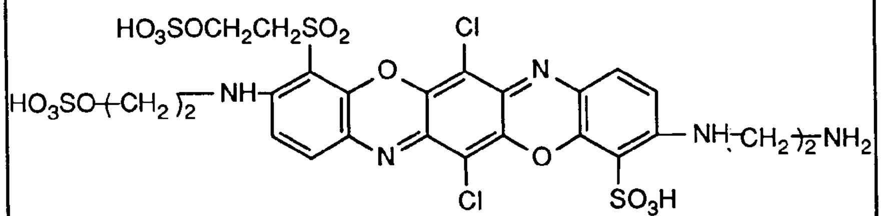 | blau |
| 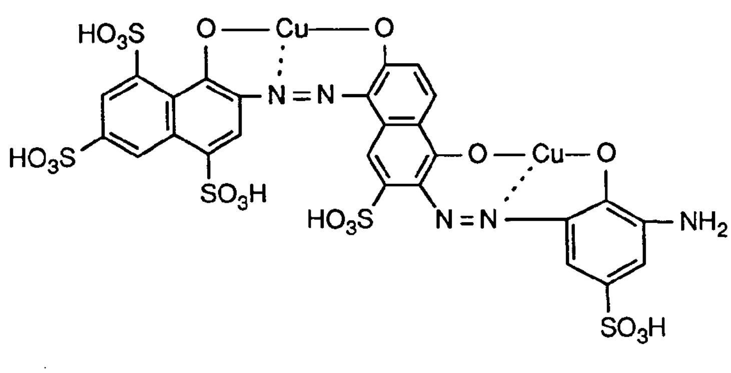 | blau |

| I | II |
|---|---|
| 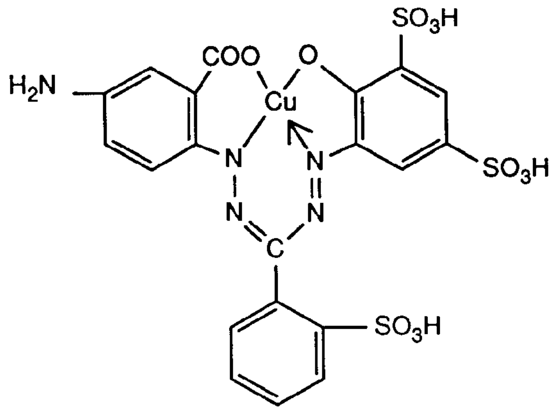 | blau |
| 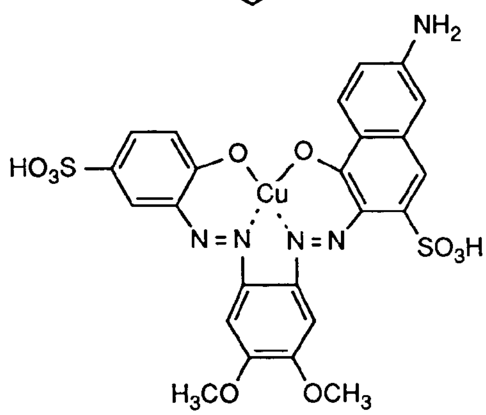 | oliv |
| 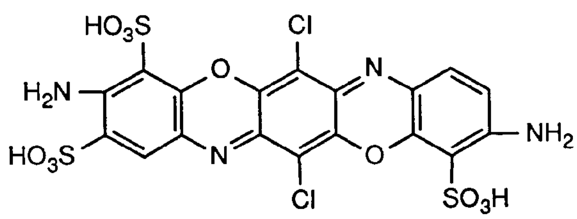 | blau |
| 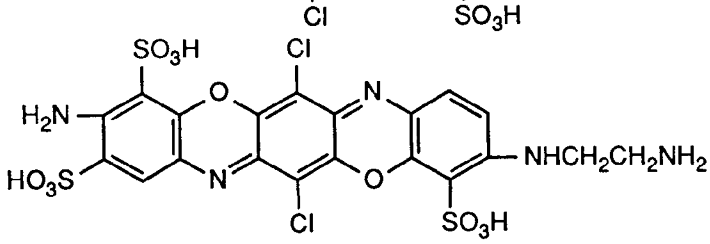 | blau |
| 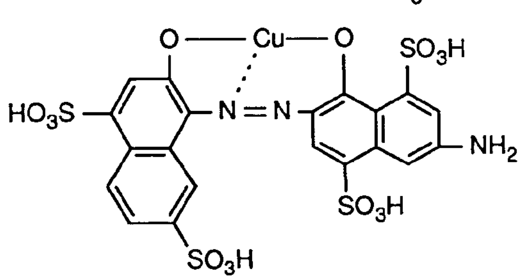 | blau |

| I | II |
|---|---|
| 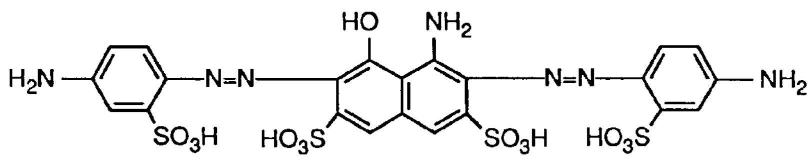 | grünblau |
| 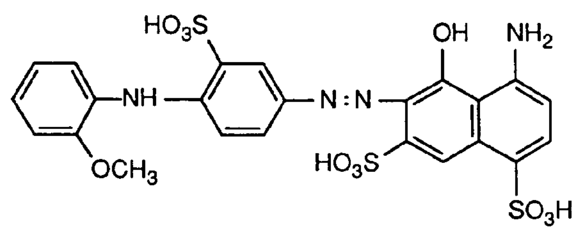 | blau |
| 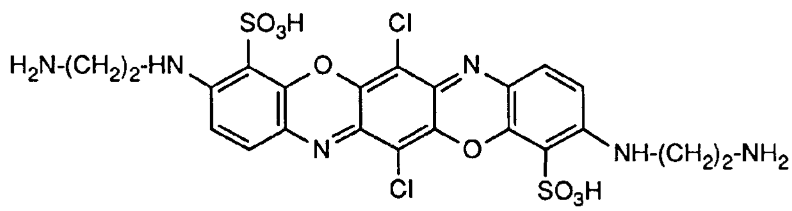 | blau |
| 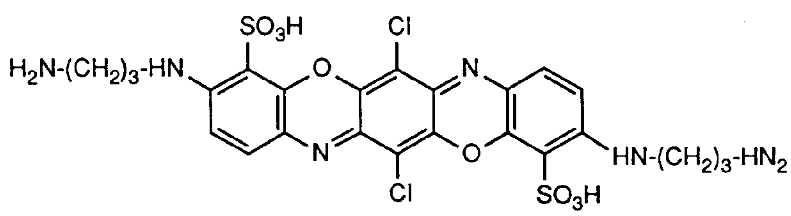 | blau |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g wasserfreies $Na_2CO_3$ enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro

Liter 16 g Natriumhydroxyd und 20 g wasserfreies $Na_2CO_3$ enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nicht-ionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g wasserfreies $Na_2CO_3$ enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38%ig) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Wäre gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein

Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel

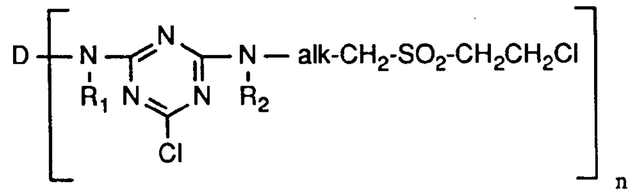

(1),

worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; $R_1$ Wasserstoff oder $C_1$-$C_4$-Alkyl, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann; $R_2$ Wasserstoff oder $C_1$-$C_4$-Alkyl, das durch Halogen, Hydroxy, $C_1$-$C_2$-Alkoxy, Carboxy oder Sulfo substituiert sein kann; alk ein geradkettiger oder verzweigter $C_1$-$C_6$-Alkylenrest; und n die Zahl 1 oder 2 ist; und der Reaktivfarbstoff der Formel (1) mindestens zwei Sulfogruppen enthält; ausgenommen Monoazo-Farbstoffe der Formel (1), welche als Kupplungskomponente 1-Amino-8-hydroxynaphthalin-3,6-disulfonsäure oder welche als Diazokomponente 2-Naphthylamin- 1,5-disulfonsäure enthalten.

2. Reaktivfarbstoffe gemäss Anspruch 1, worin $R_1$ Wasserstoff, Methyl oder Ethyl ist.

3. Reaktivfarbstoffe gemäss einem der Ansprüche 1 und 2, worin alk Methylen, Ethylen, n-Propylen, n-Butylen, n-Pentylen oder 2-Methylpropylen ist.

4. Reaktivfarbstoffe gemäss einem der Ansprüche 1 bis 3, worin D der Rest eines Monoazofarbstoffes ist.

5. Reaktivfarbstoffe gemäss einem der Ansprüche 1 bis 4, worin D der Rest eines Metallkomplexazo- oder Formazanfarbstoffes ist.

6. Reaktivfarbstoffe gemäss einem der Ansprüche 1 bis 4, worin D der Rest eines Anthrachinonfarbstoffes, Phthalocyaninfarbstoffes oder Dioxazinfarbstoffes ist.

7. Reaktivfarbstoffe gemäss Anspruch 5, worin D der Rest eines 1:1 -Kupferkomplexazofarbstoffes der Benzol- oder Naphthalinreihe ist, und das Kupferatom an je eine metallisierbare Gruppe in ortho-Stellung zur Azobrücke gebunden ist.

8. Reaktivfarbstoffe gemäss Anspruch 4, der Formel

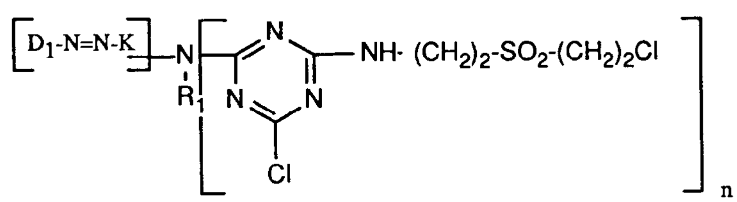

(2),

worin $D_1$ der Rest einer Diazokomponente der Benzol- oder Naphthalinreihe, K der Rest einer Kupplungskomponente der Benzol- oder Naphthalinreihe oder der heterocyclischen Reihe, $R_1$ Wasserstoff, Methyl oder Ethyl, und n die Zahl 1 oder 2 ist, und der Reaktivrest an die Diazokomponente oder an die Kupplungskomponente gebunden ist, oder je ein Reaktivrest an die Diazokomponente und an die Kupplungskomponente gebunden ist.

**9.** Reaktivfarbstoffe gemäss Anspruch 7, der Formel

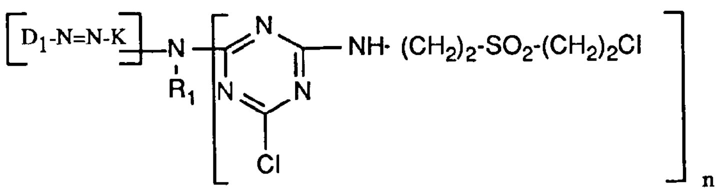

(2),

worin $D_1$-N=N-K der Rest eine 1:1 -Kupferkomplexazofarbstoffes ist, worin $D_1$ der Rest einer Diazokomponente der Benzol- oder Naphthalinreihe, K der Rest einer Kupplungskomponente der Benzol- oder Naphthalinreihe, $R_1$ Wasserstoff, Methyl oder Ethyl, und n die Zahl 1 oder 2 ist, und der Reaktivrest an die Diazokomponente oder an die Kupplungskomponente gebunden ist, oder je ein Reaktivrest an die Diazokomponente und an die Kupplungskomponente gebunden ist.

**10.** Verfahren zur Herstellung von Reaktivfarbstoffen gemäss Anspruch 1, dadurch gekennzeichnet, dass man organische Farbstoffe der Formel

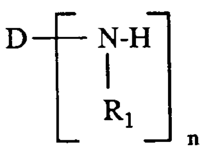

(35)

oder Farbstoffvorprodukte, mindestens ein Äquivalent eines Traizins der Formel

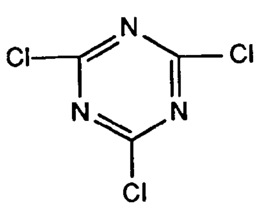

(36)

und mindestens ein Äquivalent eines Amins der Formel

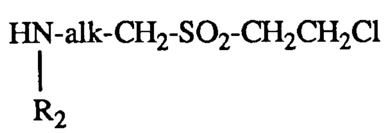

(37)

in beliebiger Folge zu einem Reaktivfarbstoff der Formel (1) kondensiert, wobei D, $R_1$, $R_2$, alk und n die in Anspruch 1 angegebenen Bedeutungen haben, und dass man im Fall der Verwendung von Farbstoffvorprodukten, diese in die gewünschten Endfarbstoffe umwandelt.

**11.** Verwendung der Reaktivfarbstoffe gemäss Anspruch 1 zum Färben oder Bedrucken von Cellulosefasern.

**12.** Verwendung gemäss Anspruch 11, zum Färben oder Bedrucken von Baumwolle

Europäisches Patentamt

# EUROPÄISCHER RECHERCHENBERICHT

Nummer der Anmeldung

EP 92 81 0087

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| X | EP-A-0 183 142 (HOECHST)<br>* Anspruch 6; Seite 8, Absatz 2 *<br>--- | 1-12 | C 09 B 62/503<br>C 09 B 62/04<br>D 06 P 1/38 |
| X | EP-A-0 260 227 (CIBA-GEIGY)<br>* Anspruch 1; Seite 3, Zeilen 1-10 *<br>--- | 1,2,3,6,10-12 | |
| X | EP-A-0 261 079 (CIBA-GEIGY)<br>* Anspruch 1; Seite 3, Zeilen 22-30; Tabelle 1, Nr. 2,8,11,18,22,26,40,48,49,56,60,65,73,74, 78; Tabelle 3, Nr. 1,8,15,21,33 *<br>--- | 1,2,3, 10-12 | |
| X | EP-A-0 374 758 (HOECHST)<br>* Ansprüche 1-18; Beispiele 2,3 *<br>----- | 1,2,3, 10-12 | |
| | | | RECHERCHIERTE SACHGEBIETE (Int. Cl.5) |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 07-05-1992 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)